(19) Europäisches Patentamt
European Patent Office
Office européen des brevets

(11) EP 4 310 117 A1

(12) EUROPEAN PATENT APPLICATION

(43) Date of publication:
24.01.2024 Bulletin 2024/04

(21) Application number: 22306079.9

(22) Date of filing: 20.07.2022

(51) International Patent Classification (IPC):
*C08F 220/18* (2006.01) *C08F 265/06* (2006.01)
*C09D 4/06* (2006.01) *C09J 4/06* (2006.01)

(52) Cooperative Patent Classification (CPC):
(C-Sets available)
**C08F 220/1804; C08F 265/06; C09D 4/06; C09J 4/06** (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ARKEMA FRANCE**
**92700 Colombes (FR)**

(72) Inventors:
- **HERR, Donald**
  **KING OF PRUSSIA, 19406-1308 (US)**
- **SCHOLTE, Jon**
  **KING OF PRUSSIA, 19406-1308 (US)**
- **MACNEILL, Christopher**
  **KING OF PRUSSIA, 19406-1308 (US)**
- **KONTOS, Renee**
  **KING OF PRUSSIA, 19406-1308 (US)**
- **FRANCESCHINI, Linda**
  **KING OF PRUSSIA, 19406-1308 (US)**
- **CICERON, Philippe**
  **60550 Verneuil en Halatte (FR)**
- **DEMOULIN, Kevin**
  **60550 Verneuil en Halatte (FR)**
- **MELEC, Pierre**
  **60550 Verneuil en Halatte (FR)**
- **VERGE, Christophe**
  **60550 Verneuil en Halatte (FR)**

(74) Representative: **Rogeau, Antoine**
**Arkema France**
**420, rue d'Estienne d'Orves**
**92705 Colombes Cedex (FR)**

# (54) CURABLE COMPOSITIONS

(57) The present invention relates to a curable composition comprising an oligomer and a low viscosity reactive diluent. The oligomer comprises polymerized high $T_g$ monomer units, polymerized low $T_g$ monomer units, polymerized chromophore monomer units, and optionally at least one polymerized additional monomer unit. The invention also relates to use of the curable composition as a pressure sensitive adhesive curable composition and methods of coating a substrate.

EP 4 310 117 A1

(52) Cooperative Patent Classification (CPC): (Cont.)

C-Sets
**C08F 220/1804, C08F 220/06, C08F 220/14, C08F 220/30;**
**C08F 220/1804, C08F 220/14, C08F 220/06, C08F 220/30;**
**C08F 220/1804, C08F 220/14, C08F 220/30;**
**C08F 220/1804, C08F 220/14, C08F 220/34, C08F 220/30;**
**C08F 220/1804, C08F 220/14, C08F 220/34, C08F 220/58;**
**C08F 220/1804, C08F 220/14, C08F 226/10, C08F 220/30;**
**C08F 220/1804, C08F 220/1804, C08F 220/30;**
**C08F 265/06, C08F 220/285, C08F 220/1811;**
**C09D 4/06, C08F 265/06;**
**C09J 4/06, C08F 265/06**

## Description

### TECHNICAL FIELD

The present invention relates to a curable composition comprising an oligomer and a low viscosity reactive diluent. The oligomer comprises polymerized high $T_g$ monomer units, polymerized low $T_g$ monomer units, polymerized chromophore monomer units, and optionally at least one polymerized additional monomer unit. The invention also relates to use of the curable composition as a pressure sensitive adhesive curable composition and methods of coating a substrate.

### BACKGROUND

Pressure sensitive adhesive (PSA) systems are generally based on acrylic, styrenic block copolymers or urethane chemistry, which have certain drawbacks during processing and film-forming. For example, solvent-based PSA systems contain volatile organic compounds, which may be difficult to evaporate. Such difficulty limits their application due to environmental and performance requirements.

Radiation curable PSA systems offer many advantages over known PSA systems, such as fast curing time, good processability, and environmental safety. However, it may be challenging to develop curable PSA systems that realize desired characteristics, such as high peel strength. Thus, there is a need for radiation curable PSA systems having high peel strength.

Embodiments of the curable compositions disclosed herein overcome drawbacks associated with known PSA systems.

### SUMMARY

A first aspect of the invention is a curable composition comprising an oligomer and a low viscosity reactive diluent having a viscosity equal to or less than 3000 cP at 25 °C. The oligomer comprises, based on the total weight of the oligomer: from 1% to 80% by weight polymerized high $T_g$ monomer units, the high $T_g$ monomer units being chosen from (meth)acrylate monomers having a glass transition temperature ($T_g$) greater than 25 °C; from 10% to 98.9% by weight polymerized low $T_g$ monomer units, the low $T_g$ monomer units being chosen from monovalent (meth)acrylate monomers having a $T_g$ equal to or less than 25 °C; from 0.1% to 40% by weight polymerized chromophore monomer units, the chromophore monomer units being chosen from (meth)acrylate monomers having a pendent Norrish Type II chromophore; and from 0% to 20% by weight at least one polymerized additional monomer units. The oligomer has a weight average molecular weight of at least 10,000 grams per mole (g/mol). The oligomer has a $T_g$ equal to or less than -10 °C. The curable composition has a viscosity of equal to or less than 50,000 cP at 60 °C.

### DESCRIPTION OF DRAWINGS

FIG. 1 is a graph of gel content of cured comparative examples and examples according to one or more embodiments described herein;

FIG. 2 is a graph of gel content of cured comparative examples and examples according to one or more embodiments described herein;

FIG. 3 is a graph of gel content of cured comparative examples and examples according to one or more embodiments described herein;

FIG. 4 is a graph of cure speed and heat flow area under curve of comparative example and examples according to one or more embodiments described herein;

FIG. 5is a graph of cure speed and heat flow area under curve of comparative example and examples according to one or more embodiments described herein;

FIG. 6 is a graph of cure speed of examples according to one or more embodiments described herein;

FIG. 7 is a graph of average load relative to peel strength of examples according to one or more embodiments

described herein;

FIG. 8 is a graph of average load relative to peel strength of comparative examples and examples according to one or more embodiments described herein; and

FIG. 9 is a graph of average load relative to peel strength of comparative examples and examples according to one or more embodiments described herein.

DETAILED DESCRIPTION

Definitions

As used herein, the term "comprises a" may mean "comprises one or more".

Unless otherwise mentioned, the weight percentages in a compound or a composition are expressed relative to the weight of the compound, respectively of the composition.

The term "substitution" herein means that at least one hydrogen atom (-H) bonded to a carbon atom or heteroatom of a corresponding unsubstituted compound or functional group is replaced by a substituent (e.g. $R^S$). The term "persubstitution" means that every hydrogen atom (H) bonded to a carbon atom or heteroatom of a corresponding unsubstituted compound or functional group is replaced by a substituent (e.g., $R^S$). The term "polysubstitution" means that at least two, but fewer than all, hydrogen atoms bonded to carbon atoms or heteroatoms of a corresponding unsubstituted compound or functional group are replaced by a substituent. Unless otherwise defined or limited in a specific context, a substituent group generally, or a substituent group referred to as $R^S$, may be any chemical moiety, typically, but not necessarily limited to, a chemical moiety having from 1 to 50, or from 1 to 40, or from 1 to 30, or from 1 to 20, or from 1 to 10 total atoms. Examples of substituent groups $R^S$ include, but are not limited to, a hydrocarbyl, a heterohydrocarbyl, an aryl, a heteroaryl, an alkyl, a cycloalkyl, a heteroatom, a carbonyl, a hydroxy, an ester, an amine, an amide, or a halide according to their respective definitions herein or their commonly understood meaning, any of which substituents themselves may be substituted or unsubstituted. In some embodiments, substituents $R^S$ may be chosen from a ($C_1$-$C_{30}$)hydrocarbyl, a ($C_1$-$C_{30}$)heterohydrocarbyl, a ($C_6$-$C_{30}$)aryl, or a ($C_6$-$C_{30}$)heteroaryl.

The term "hydrocarbyl" means a monovalent hydrocarbon, in which each hydrocarbon is aromatic or non-aromatic, saturated or unsaturated, straight chain or branched chain, cyclic (having three carbons or more, and including mono- and poly-cyclic, fused and non-fused polycyclic, and bicyclic) or acyclic, and substituted by one or more $R^S$, or unsubstituted. In this disclosure, hydrocarbyl may be an unsubstituted or substituted alkyl, an unsubstituted or substituted cycloalkyl, or an unsubstituted or substituted aryl.

The term "aryl" means an optionally substituted polyunsaturated aromatic group. The aryl may contain a single ring (i.e. phenyl) or more than one ring wherein at least one ring is aromatic. When the aryl comprises more than one more ring, the rings may be fused, linked via a covalent bond (for example biphenyl). The aromatic ring may optionally comprise one to two additional fused rings (i.e. cycloalkyl, heterocycloalkyl or heteroaryl). Examples include phenyl, naphtyl, biphenyl, phenanthrenyl and naphthacenyl.

The term "alkyl" means a monovalent saturated acyclic hydrocarbon group of $-C_nH_{2n+1}$ wherein n is 1 to 20. An alkyl may be linear or branched. Examples of alkyl groups include methyl, ethyl, propyl, isopropyl, butyl, isobutyl, tert-butyl, pentyl, hexyl, 2-methylbutyl, 2,2-dimethylpropyl, n-hexyl, 2-methylpentyl, 2,2-dimethylbutyl, n-heptyl, 2-ethylhexyl, and the like.

The term "cycloalkyl" means a monovalent saturated alicyclic hydrocarbon group comprising a cycle. Examples of cycloalkyl groups include cyclopentyl, cyclohexyl and isobornyl.

The term "heterocycloalkyl" means a cycloalkyl having at least one ring atom that is a heteroatom selected from O, N or S.

The term "halogen" means an atom selected from Cl, Br, F and I.

The term "alkoxy" means a group of formula -O-alkyl, wherein the alkyl is as defined above.

The term "aryloxy" means a group of formula -O-aryl, wherein the aryl is as defined above.

The term "thioalkyl" means a group of formula -S-alkyl, wherein the alkyl is as defined above.

The term "thioaryl" means a group of formula -S-aryl, wherein the aryl is as defined above.

The term "alkenyl" means a monovalent acyclic hydrocarbon group comprising at least one C=C double bond. An alkenyl may be linear or branched.

The term "alkynyl" means a monovalent acyclic hydrocarbon group comprising at least one C=C triple bond. An alkynyl may be linear or branched.

The term "aralkyl" means an aryl substituted by an alkyl group. An example of an aralkyl group is tolyl.

The term "alkaryl" means an alkyl substituted by an aryl group. An example of an alkaryl group is benzyl (-CH2-Phenyl).

The term "heteroaryl" means an aryl having at least one ring atom that is a heteroatom.

The term "alkylamino" means an alkyl substituted by at least one amino group.

The term "alkylthiol" means an alkyl substituted by at least one thiol group

The term "hydroxyalkyl" means an alkyl substituted by at least one hydroxy group.

The term "haloalkyl" means an alkyl substituted by at least one halogen.

The term "alkylene" means a linker derived from an alkane of formula $C_mH_{2m+2}$ by removing one hydrogen atom at each point of attachment of the linker. An alkylene may be divalent, trivalent, tetravalent or have even higher valencies.

The term "alkoxylated" means a compound, group or linker containing one or more oxyalkylene moieties, in particular one or more oxyalkylene selected from oxyethylene ($-O-CH_2-CH_2-$), oxypropylene ($-O-CH_2-CH(CH_3)-$ or $-O-CH(CH_3)-CH_2-$), oxybutylene ($-O-CH_2-CH_2-CH_2-CH_2-$) and mixtures thereof. For example, an alkoxylated compound, group or linker may contain from 1 to 30 oxyalkylene moieties.

The term "(meth)acrylate" means acrylate or methacrylate. The term "acrylate" means an acryloyloxy group ($-O-C(=O)-CH=CH_2$). The term "methacrylate" means a methacryloyloxy group ($-O-C(=O)-C(CH_3)=CH_2$).As used herein, the term "monomers" have a number average molecular weight of less than 1,000 g/mol, preferably 100 to 950 g/mol.

As used herein, the term "oligomers" have a number average molecular weight from equal to or more than 1,000 g /mol, preferably 1,050 to 60,000 g/mol, more preferably 10,000 to 50,000 g/mol.

As used herein, "number average molecular weight ('$M_n$')" or "weight average molecular weight ('$M_w$')" are determined using a size exclusion chromatography (SEC) using polymethyl methacrylate reference standards and tetrahydrofuran as the solvent, unless expressly noted otherwise.

The term "glass transition temperature" or "$T_g$" refers to the temperature at which a material changes from a glassy state to a rubbery state. In this context, the term "glassy" means that the material is hard and brittle while the term "rubbery" means that the material is elastic and flexible. For polymeric materials, the $T_g$ is the critical temperature that separates their glassy and rubbery behaviors. If a polymeric material is at a temperature below its $T_g$, large-scale molecular motion is severely restricted because the material is essentially frozen. On the other hand, if the polymeric material is at a temperature above its $T_g$, molecular motion on the scale of its repeat unit takes place, allowing it to be soft or rubbery.

All references herein to a $T_g$ of a monomer refer to the $T_g$ of a homopolymer formed from that monomer. $T_g$ values of common monomers are well-known from literature.. If not reported in the literature, the glass transition temperature values may be determined in accordance with ASTM E1356-08, "Standard Test Method for Assignment of the Glass Transition Temperatures by Differential Scanning Calorimetry" as the inflection temperature (Ti). The glass transition temperatures of the oligomers described herein and mentioned in the examples below are calculated using the Fox Equation based on the mass fractions and $T_g$ values of each individual monomer of oligomer or the polymeric material that includes more than one discrete type of monomer. The $T_g$ of the curable composition when cured is determined by the above-described ASTM E1356-08 DSC method or, if not possible owing to a lack of a detectable inflection point, by shear rheology.

The terms "mass fraction" and "weight fraction" are used herein interchangeably and are to be regarded as equivalent to each other with respect to embodiments or examples herein.

The "Fox Equation" refers to equation (1):

$$1 / T_{g,mix} \approx \sum_i \omega_i / T_{g,i} \qquad \text{equation (1)}$$

where $T_{g,\ mix}$ is the glass transition temperature of a mixture of *i* chemically discrete components, such as two or more discrete monomers of an oligomer or polymer, $T_{g,i}$ is the glass transition temperature of the *i*-th component, and $\omega_i$ is the mass fraction of the *i*-th component, based on the total mass of the oligomer or polymer. Hereinafter, the value $T_{g,\ mix}$ with respect to multiple discrete monomers in an oligomer or polymer is referred to as the "Fox Equation average $T_g$" of the multiple discrete monomers.

For two components, A and B, the Fox Equation reduces to equation (2):

$$1 / T_{g,mix} \approx \omega_A / T_{g,A} + \omega_B / T_{g,B} \qquad \text{equation (2)}$$

The term "high-$T_g$ monomer unit" refers to a monomer that, when homopolymerized, produces a homopolymer having a $T_g$ of equal to or greater than 25 °C. In embodiments of the oligomer, for which only one kind of high-$T_g$ monomer unit is present in the oligomer, the $T_g$ of the high-$T_g$ monomer units is the $T_g$ of a homopolymer of the one kind of high-$T_g$ monomer unit. In embodiments of the oligomer, for which two or more types of distinct high-$T_g$ monomer units are present in the oligomer, the $T_g$ of the high-$T_g$ monomer units of the oligomer collectively refers to the Fox Equation

average $T_g$ of the combination of the high-$T_g$ monomer units, in which for equation (1) the individual mass fractions $\omega_i$ are mass fractions of each individual high-$T_g$ monomer unit in the oligomer, based on the total mass of all the high-$T_g$ monomer units present in the oligomer (that is, the monomer units having a $T_g$ of equal to or greater than 25 °C), not on the total mass of the oligomer as a whole.

The term "Fox Equation average" may be used herein even with respect to a single monomer that is not part of a mixture of two or more monomers. It should be readily understood that a Fox Equation average $T_g$ with respect to a single monomer is equivalent to the $T_g$ of the single monomer itself, as defined herein, as the term mass fraction term $\omega$ in such a situation would equal one.

The term "low-$T_g$ monomer unit" refers to a monomer that, when homopolymerized, produces a homopolymer having a $T_g$ of less than 25 °C. In embodiments of the oligomer, for which only one kind of low-$T_g$ monomer unit is present in the oligomer, the $T_g$ of the low-$T_g$ monomer units is the $T_g$ of a homopolymer of the one kind of low-$T_g$ monomer unit. In embodiments of the oligomer, for which two or more types of distinct low-$T_g$ monomer units are present in the oligomer, the $T_g$ of the low-$T_g$ monomer units of the oligomer collectively refers to the Fox Equation average $T_g$ of the combination of the low-$T_g$ monomer units, in which for equation (1) the individual mass fractions $\omega_i$ are mass fractions of each individual low-$T_g$ monomer unit in the oligomer, based on the total mass of all the low-$T_g$ monomer units present in the oligomer (that is, the monomer units having a $T_g$ of less than 25 °C), not on the total mass of the oligomer as a whole.

The term "photoinitiator" may be considered any type of substance that, upon exposure to radiation (e.g., actinic radiation), forms species that initiate the reaction and curing of polymerizing organic substances present in a curable composition.

The term "chromophore" refers herein to a Norrish Type II light absorbing molecule that enters an exited state upon absorbing light. From this excited state, the molecule can interact or react with other molecules to produce reactive radical species.

When used to describe certain carbon atom-containing chemical groups, an expression having the form "$A^1$-$A^3$" refers to each $A^x$ group within the range from $A^1$ to $A^3$, inclusive of 1 and 3. For example, an expression having the form "$A^1$-$A^3$" refers to $A^1$, $A^{2,}$ and $A^3$. An expression having the form "$Z^1$-$Z^3$" refers to each $Z^x$ group within the range from $Z^1$ to $Z^3$, inclusive of 1 and 3. For example, an expression having the form "$Z^1$-$Z^3$" refers to $Z^1$, $Z^2$ and $Z^3$.

The term "independently selected" is used herein to indicate that the substituent groups, such as, $Z^1$, $Z^{2,}$ $Z^3$, and $Z^4$, can be identical or different (e.g., $Z^1$, $Z^{2,}$ $Z^3$, and $Z^4$ may all be $-CH_3$ or $Z^1$ and $Z^2$ may be $-CH_3$ and $Z^3$ and $Z^4$ may be -H, etc.). A chemical name associated with a substituent group is intended to convey the chemical structure that is recognized in the art as corresponding to that of the chemical name. Thus, chemical names are intended to supplement and illustrate, not preclude, the structural definitions known to those of skill in the art.

When used to describe certain carbon atom-containing chemical groups, a parenthetical expression having the form "($C_x$-$C_y$)" means that the unsubstituted form of the chemical group has from x carbon atoms to y carbon atoms, inclusive of x and y. For example, a ($C_1$-$C_{20}$)hydrocarbyl is a hydrocarbyl group having from 1 to 20 carbon atoms in its unsubstituted form. In some embodiments and general structures, certain chemical groups may be substituted by one or more substituents such as $R^S$. An $R^S$ substituted version of a chemical group defined using the "($C_x$-$C_y$)" parenthetical may contain more than y carbon atoms depending on the identity of any groups $R^S$. For example, a "($C_1$-$C_{20}$)alkyl substituted with exactly one group $R^S$, where $R^S$ is phenyl ($-C_6H_5$)" may contain from 7 to 27 carbon atoms. Thus, in general when a chemical group defined using the "($C_x$-$C_y$)" parenthetical is substituted by one or more carbon atom-containing substituents $R^S$, the minimum and maximum total number of carbon atoms of the chemical group is determined by adding to both x and y the combined sum of the number of carbon atoms from all of the carbon atom-containing substituents $R^S$.

The term "-H" means a hydrogen or hydrogen radical that is covalently bonded to an atom other than hydrogen. "Hydrogen" and "-H" are interchangeable, and, unless clearly specified, have identical meanings.

The term "($C_1$-$C_{30}$)hydrocarbyl" means a monovalent hydrocarbon of from 1 to 30 carbon atoms, in which each monovalent hydrocarbon is aromatic or non-aromatic, saturated or unsaturated, straight chain or branched chain, cyclic (having three carbons or more, and including mono- and poly-cyclic, fused and non-fused polycyclic, and bicyclic) or acyclic, and substituted by one or more $R^S$, or unsubstituted. In this disclosure, a ($C_1$-$C_{30}$)hydrocarbyl may be an unsubstituted or substituted ($C_1$-$C_{30}$)alkyl, ($C_3$-$C_{30}$)cycloalkyl, or ($C_6$-$C_{30}$)aryl.

The term "($C_2$-$C_{30}$)alkyl" mean a saturated straight or branched monovalent hydrocarbon of from 2 to 30 carbon atoms that is unsubstituted or substituted by one or more $R^S$. Examples of unsubstituted ($C_2$-$C_{30}$)alkyl are unsubstituted ($C_2$-$C_{20}$)alkyl; unsubstituted ($C_6$-$C_{25}$)alkyl; unsubstituted ($C_4$-$C_8$)alkyl; 1-butyl; 2-butyl; 2-methylpropyl; 1,1-dimethylethyl; 1-pentyl; 1-hexyl; 1-heptyl; 1-nonyl; and 1-decyl. Examples of substituted ($C_2$-$C_{30}$)alkyl are substituted ($C_2$-$C_{20}$)alkyl, substituted ($C_2$-$C_{10}$)alkyl.

The term "($C_6$-$C_{40}$)aryl" means an unsubstituted or substituted (by one or more $R^S$) monocyclic, bicyclic, or tricyclic aromatic monovalent hydrocarbon of from 6 to 40 carbon atoms, of which at least from 6 to 14 of the carbon atoms are aromatic ring carbon atoms. A monocyclic aromatic monovalent hydrocarbon includes one aromatic ring; a bicyclic aromatic monovalent hydrocarbon has two rings; and a tricyclic aromatic monovalent hydrocarbon has three

rings. When the bicyclic or tricyclyc aromatic monovalent hydrocarbon is present, at least one of the rings of the monovalent hydrocarbon is aromatic. The other ring or rings of the aromatic monovalent hydrocarbon may be independently fused or non-fused and aromatic or non-aromatic. Examples of unsubstituted ($C_6$-$C_{40}$)aryl include: unsubstituted ($C_6$-$C_{20}$)aryl, unsubstituted ($C_6$-$C_{18}$)aryl; 2-($C_1$-$C_5$)alkyl-phenyl; phenyl; fluorenyl; tetrahydrofluorenyl; idacenyl; hexahydracenyl; hexahydroindacenyl; indenyl; dihydroindenyl; naphthyl; tetrahydronaphthyl; and phenanthrene. Examples of substituted ($C_6$-$C_{40}$)aryl include: substituted ($C_1$-$C_{20}$)aryl; and substituted ($C_6$-$C_{18}$)aryl.

The term "($C_6$-$C_{12}$)cycloalkyl" means a saturated cyclic monovalent hydrocarbon of from 6 to 12 carbon atoms that is unsubstituted or substituted. Other cycloalkyl groups (e.g., ($C_x$-$C_y$)cycloalkyl) are defined in an analogous manner as having from x to y carbon atoms and being either unsubstituted or substituted by one or more $R^S$. Examples of unsubstituted ($C_6$-$C_{12}$)cycloalkyl are unsubstituted ($C_6$-$C_8$)cycloalkyl, unsubstituted ($C_6$-$C_{10}$)cycloalkyl, cyclopropyl, cyclobutyl, cyclopentyl, cyclohexyl, cycioheptyl, cyclooctyl, cyclononyl, and cyclodecyl. Examples of substituted ($C_6$-$C_{12}$)cycloalkyl are substituted ($C_6$-$C_8$)cycloalkyl, substituted ($C_6$-$C_{10}$)cycloalkyl, isobornyl, and 3,3,5-trimethylcyclohexyl.

The term "heteroatom," refers to an atom other than hydrogen or carbon. Examples of heteroatoms include O, S, N, Si. The term "heterohydrocarbon" refers to a molecule or molecular framework in which one or more carbon atoms of a hydrocarbon are replaced with a heteroatom. The term "($C_1$-$C_{30}$)heterohydrocarbyl" means a monovalent heterohydrocarbon of from 1 to 30 carbon atoms, and the term "($C_1$-$C_{30}$)heterohydrocarbylene" means a divalent heterohydrocarbon of from 1 to 30 carbon atoms. The heterohydrocarbon of the ($C_1$-$C_{30}$)heterohydrocarbyl or the ($C_1$-$C_{30}$)heterohydrocarbylene has one or more heteroatoms. The valency or connection point of the heterohydrocarbyl may be on a carbon atom or a heteroatom. The two valencies of the heterohydrocarbylene may be on a single carbon atom or on a single heteroatom. Additionally, one of the two valencies or connection points of the diradical may be on a carbon atom and the other valency may be on a different carbon atom; one of the two valencies or connection points may be on a carbon atom and the other on a heteroatom; or one of the two valencies or connection points may be on a heteroatom and the other valency or connection point on a different heteroatom. Each ($C_1$-$C_{30}$)heterohydrocarbyl and ($C_1$-$C_{30}$)heterohydrocarbylene may be unsubstituted or substituted, aromatic or non-aromatic, saturated or unsaturated, straight chain or branched chain, cyclic (including mono- and poly-cyclic, fused and non-fused polycyclic), or acyclic.

The term "saturated" means lacking carbon-carbon double bonds, carbon-carbon triple bonds, and (in heteroatom-containing groups) carbon-nitrogen, carbon-phosphorous, and carbon-silicon double bonds. Where a saturated chemical group is substituted by one or more substituents $R^S$, one or more double and/or triple bonds optionally may or may not be present in substituents $R^S$. The term "unsaturated" means containing one or more carbon-carbon double bonds, carbon-carbon triple bonds, or (in heteroatom-containing groups) one or more carbon-nitrogen, carbon-phosphorous, or carbon-silicon double bonds, not including double bonds that may be present in substituents $R^S$, if any, or in (hetero) aromatic rings, if any.

The term "linker" means a multivalent group. A linker may connect at least two moieties of a compound together, in particular 2 to 16 moieties of a compound together. For example, a linker that connects two moieties of a compound together is referred to as a divalent linker and a linker that connects three moieties of a compound together is referred to as a trivalent linker.

Oligomer

The curable compositions disclosed herein include an oligomer. The oligomers herein include at least one polymerized chromophore monomer unit, as defined herein. The oligomers herein further include at least one polymerized high-Tg monomer unit and at least one polymerized low Tg monomer unit. The oligomers herein optionally include at least one polymerized additional monomer unit, as defined herein.

In embodiments, the oligomer may have a weight average molecular weight of at least 10,000 grams per mole (g/mol). In embodiments, the oligomer may have a weight average molecular weight from 10,000 g/mol to 600,000 g/mol. In embodiments, the oligomer may have a weight average molecular weight equal to or greater than 10,000 g/mol, equal to or greater than 25,000 g/mol, or even equal to or greater than 50,000 g/mol. In embodiments, the oligomer may have a weight average molecular weight equal to or less than 600,000 g/mol, equal to or less than 500,000 g/mol, equal to or less than 400,000 g/mol, equal to or less than 300,000 g/mol, equal to or less than 200,000 g/mol, or even equal to or less than 100,000 g/mol. In embodiments, the oligomer may have a weight average molecular weight from 10,000 g/mol to 600,000 g/mol, from 10,000 g/mol to 500,000 g/mol, from 10,000 g/mol to 400,000 g/mol, from 10,000 g/mol to 300,000 g/mol, from 10,000 g/mol to 200,000 g/mol, from 10,000 g/mol to 100,000 g/mol, from 25,000 g/mol to 600,000 g/mol, from 25,000 g/mol to 500,000 g/mol, from 25,000 g/mol to 400,000 g/mol, from 25,000 g/mol to 300,000 g/mol, from 25,000 g/mol to 200,000 g/mol, from 25,000 g/mol to 100,000 g/mol, from 50,000 g/mol to 600,000 g/mol, from 50,000 g/mol to 500,000 g/mol, from 50,000 g/mol to 400,000 g/mol, from 50,000 g/mol to 300,000 g/mol, from 50,000 g/mol to 200,000 g/mol, or even from 50,000 g/mol to 100,000 g/mol, or any and all subranges formed from any of these endpoints.

In embodiments, the oligomer may have a glass transition temperature $T_g$ equal to or less than -10 °C to ensure

the curable composition is suitable for certain applications, such as use as a pressure sensitive adhesive. In embodiments, the oligomer may have a $T_g$ equal to or less than -10 °C, such as equal to or less than -15 °C, equal to or less than -20 °C, equal to or less than -25 °C, or even equal to or less than -30 °C. In embodiments, the oligomer may have a $T_g$ equal to or greater than -120 °C, equal to or greater than -100 °C, equal to or greater than -80 °C, or even equal to or greater than -60 °C. In embodiments, the oligomer may have a $T_g$ from -10 °C to -120 °C, from -10 °C to -100 °C, from -10 °C to -80 °C, from -10 °C to -60 °C, from -15 °C to -120 °C, from -15 °C to -100 °C, from -15 °C to -80 °C, from -15 °C to -60 °C, from -20 °C to -120 °C, from -20 °C to -100 °C, from -20 °C to -80 °C, from -20 °C to -60 °C, from -25 °C to -120 °C, from -25 °C to -100 °C, from -25 °C to -80 °C, from -25 °C to -60 °C, from -30 °C to -120 °C, from -30 °C to -100 °C, from -30 °C to -80 °C, or even from -30 °C to -60 °C, or any and all subranges formed from any of these endpoints.

The amount of oligomer in the curable composition will vary depending on the desired viscosity. In embodiments, the curable composition may comprise, based on a weight of the curable composition, from 20% to 80% by weight of the oligomer. In embodiments, the curable composition may comprise, based on a weight of the curable composition, equal to or greater than 20%, equal to or greater than 25%, equal to or greater than 30%, equal to or greater than 35%, or even equal to or greater than 40%, by weight of the oligomer. In embodiments, the curable composition may comprise, based on a weight of the curable composition, equal to or less than 80%, equal to or less than 75%, equal to or less than 70%, equal to or less than 65%, or even equal to or less than 60%, by weight of the oligomer. In embodiments, the amount by weight of the oligomer in the curable composition, based on the total weight of the curable composition, may be from 20% to 80%, from 20% to 75%, from 20% to 70%, from 20% to 75%, from 20% to 60%, from 25% to 80%, from 20% to 75%, from 25% to 70%, from 25% to 75%, from 25% to 60%, from 30% to 80%, from 30% to 75%, from 30% to 70%, from 30% to 75%, from 30% to 60%, from 35% to 80%, from 35% to 75%, from 35% to 70%, from 35% to 75%, from 35% to 60%, from 40% to 80%, from 40% to 75%, from 40% to 70%, from 40% to 75%, or even from 40% to 60%, or any and all subranges formed from any of these endpoints.

High $T_g$ Monomer Units

The oligomers disclosed herein include polymerized high $T_g$ monomer units.

The polymerized high-$T_g$ monomer units may be identical or a combination of multiple types of discrete monomer units such as two types of discrete monomer units, three types of discrete monomer units, four types of discrete monomer units, or more than four types of discrete monomer units. In embodiments, the high-$T_g$ monomer units have a glass transition temperature ($T_g$) or a Fox Equation average $T_g$ equal to or greater than 25 °C. As defined herein, any reference herein to the $T_g$ of a monomer refers to the $T_g$ of a homopolymer formed from that monomer. In embodiments where the oligomer comprises two or more distinct high-$T_g$ monomer units, such as a combination of methyl (meth)acrylate and isobornyl (meth)acrylate, the $T_g$ refers to the Fox Equation average $T_g$ of the high-$T_g$ monomer units, as defined previously herein. In embodiments, the Fox Equation average $T_g$ of the high-$T_g$ monomer units is greater than 25 °C, such as equal to or greater than 30 °C, equal to or greater than 35 °C, equal to or greater than 40 °C, equal to or greater than 45 °C, equal to or greater than 50 °C, equal to or greater than 55 °C, equal to or greater than 60 °C, equal to or greater than 65 °C, equal to or greater than 70 °C, equal to or greater than 75 °C, or even equal to or greater than 80 °C. In embodiments, the high $T_g$ monomer units may have a $T_g$ equal to or less than 200 °C, equal to or less than 150 °C, or even equal to or less than 130 °C. In embodiments, the high $T_g$ monomer units may have a $T_g$ from 25 °C to 200 °C, from 25 °C to 150 °C, from 25 °C to 130 °C, from 30 °C to 200 °C, from 30 °C to 150 °C, from 30 °C to 130 °C, from 35 °C to 200 °C, from 35 °C to 150 °C, from 35 °C to 130 °C, from 40 °C to 200 °C, from 40 °C to 150 °C, from 40 °C to 130 °C, from 45 °C to 200 °C, from 45 °C to 150 °C, from 45 °C to 130 °C, from 50 °C to 200 °C, from 50 °C to 150 °C, from 50 °C to 130 °C, from 55 °C to 200 °C, from 55 °C to 150 °C, from 55 °C to 130 °C, from 60 °C to 200 °C, from 60 °C to 150 °C, from 60 °C to 130 °C, from 65 °C to 200 °C, from 65 °C to 150 °C, from 65 °C to 130 °C, from 70 °C to 200 °C, from 70 °C to 150 °C, from 70 °C to 130 °C, from 75 °C to 200 °C, from 75 °C to 150 °C, or even from 75 °C to 130 °C, or any and all subranges formed from any of these endpoints.

The Fox Equation average $T_g$ of the high-$T_g$ monomer units is greater than the Fox Equation average $T_g$ of the low-$T_g$ monomer units. In embodiments the Fox Equation average $T_g$ of the high-$T_g$ monomer units is at least 20 °C greater than the Fox Equation average $T_g$ of the low-$T_g$ monomer units. In embodiments, the difference between the Fox Equation average $T_g$ of the high-$T_g$ monomer units and the Fox Equation average $T_g$ of the low-$T_g$ monomer units is greater than 20 °C, such as greater than 25 °C, greater than 30 °C, greater than 35 °C, greater than 40 °C, greater than 45 °C, greater than 50 °C, greater than 55 °C, greater than 60 °C, greater than 65 °C, greater than 70 °C, greater than 75 °C, greater than 80 °C, greater than 85 °C, greater than 90 °C, greater than 95 °C, greater than 100 °C, greater than 105 °C, greater than 110 °C, greater than 115 °C, or even greater than 120 °C. In embodiments, the difference between the Fox Equation average $T_g$ of the high-$T_g$ monomer units and the Fox Equation average $T_g$ of the low-$T_g$ monomer units is at least 200 °C, at least 150 °C, at least 120 °C, at least 100 °C, at least 90 °C, at least 80 °C, at least 70 °C, at least 60 °C, at least 50 °C, at least 40 °C, or even at least 30 °C. In embodiments, the difference between the Fox Equation average $T_g$ of the high-$T_g$ monomer units and the Fox Equation average $T_g$ of the low-$T_g$ monomer units

is from 20 °C to 200 °C. As non-limiting examples the difference between the Fox Equation average $T_g$ of the high-$T_g$ monomer units and the Fox Equation average $T_g$ of the low-$T_g$ monomer units may be from 20 °C to 200 °C, from 20 °C to 150 °C, from 20 °C to 120 °C, from 20 °C to 100 °C, from 20 °C to 90 °C, from 20 °C to 80 °C, from 20 °C to 70 °C, from 20 °C to 60 °C, from 20 °C to 50 °C, from 20 °C to 40 °C, from 20 °C to 30 °C, from 30 °C to 200 °C, from 30 °C to 150 °C, from 30 °C to 120 °C, from 30 °C to 100 °C, from 30 °C to 90 °C, from 30 °C to 80 °C, from 30 °C to 70 °C, from 30 °C to 60 °C, from 30 °C to 50 °C, from 30 °C to 40 °C, from 40 °C to 200 °C, from 40 °C to 150 °C, from 40 °C to 120 °C, from 40 °C to 100 °C, from 40 °C to 90 °C, from 40 °C to 80 °C, from 40 °C to 70 °C, from 40 °C to 60 °C, from 40 °C to 50 °C, from 50 °C to 200 °C, from 50 °C to 150 °C, from 50 °C to 120 °C, from 50 °C to 100 °C, from 50 °C to 90 °C, from 50 °C to 80 °C, from 50 °C to 70 °C, from 50 °C to 60 °C, from 60 °C to 200 °C, from 60 °C to 150 °C, from 60 °C to 120 °C, from 60 °C to 100 °C, from 60 °C to 90 °C, from 60 °C to 80 °C, from 60 °C to 70 °C, from 70 °C to 200 °C, from 70 °C to 150 °C, from 70 °C to 120 °C, from 70 °C to 100 °C, from 70 °C to 90 °C, from 70 °C to 80 °C, from 80 °C to 200 °C, from 80 °C to 150 °C, from 80 °C to 120 °C, from 80 °C to 100 °C, or even from 80 °C to 90 °C, or any and all subranges formed from any of these endpoints.

In embodiments, the high $T_g$ monomer units may include (meth)acrylate monomers.

In embodiments, the high $T_g$ monomer units are monovalent. In other embodiments, the high $T_g$ monomer units may be multivalent, where the individual monomer unit comprises two or more active sites that participate in crosslinking upon curing. Examples of monovalent monomer units may include ethyl (meth)acrylate and tert-butyl acrylate. Examples of multivalent monomer units may include divalentmonomer units, such as dicyclopentadienyl acrylate.

In embodiments, each of the high $T_g$ monomer units may be according to formula (I):

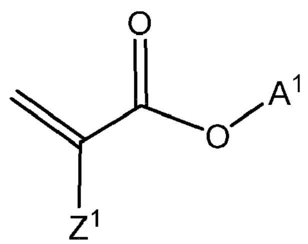

(I)

where:

$A^1$ is $(C_1\text{-}C_{30})$hydrocarbyl or $(C_1\text{-}C_{30})$heterohydrocarbyl; and
$Z^1$ is -H or $-CH_3$.

For instance, in embodiments, $A^1$ may be chosen from methyl, ethyl, isopropyl, isobutyl, tert-butyl, a substituted or unsubstituted $(C_6\text{-}C_{12})$cycloalkyl, or combinations thereof. In embodiments, $A^1$ may be chosen from methyl, tert-butyl, isobornyl, cyclohexyl, or 3,3,5-trimethylcyclohexyl, or combinations thereof.

Examples of suitable high $T_g$ monomer units may include, but not be limited to, monomers units chosen from 2-phenylethyl methacrylate, neopentyl methacrylate, 3,3,5-trimethylcyclohexyl acrylate, tert-butyl methacrylate, octadecyl methacrylate, octadecyl acrylate, glycidyl methacrylate, propyl methacrylate, tetrahydrofurfuryl methacrylate, benzyl methacrylate, isobutyl methacrylate, glycidyl methacrylate, ethyl methacrylate, 2,2,3,3-tetrafluoropropyl methacrylate, 2-hydroxypropyl methacrylate, 2,2,2-trifluoroethyl methacrylate, 2-hydroxyethyl methacrylate, isopropyl methacrylate, isobornyl acrylate, methyl (meth)acrylate, butyl cyanoacrylate, isobornyl methacrylate, phenyl methacrylate, 2-cyanobutyl acrylate, tert-butyl methacrylate, cyclohexyl acrylate, cyclohexyl methacrylate, 4-tert-butylcyclohexyl acrylate, 4-tert-butylcyclohexyl methacrylate, ethyl cyanoacrylate, methyl cyanoacrylate, 3,3,5-trimethylcyclohexyl acrylate, 3,3,5-trimethylcyclohexyl methacrylate, a substituted or unsubstituted $(C_6\text{-}C_{12})$cycloalkyl (meth)acrylate, adamantyl (meth)acrylate or combinations thereof.

The weight fraction of the polymerized high $T_g$ monomer units in the oligomer will vary depending on desired properties of the oligomer, such as $T_g$, molecular weight, and gel content after curing. In embodiments, the oligomer may comprise, based on the total weight of the oligomer, from 1% to 80% by weight polymerized high $T_g$ monomer units. It should be understood that, when the oligomer includes more than one discrete type of polymerized high $T_g$ monomer unit, the weight fraction of the polymerized high $T_g$ monomer units in the oligomer equals the sum of the individual weight fractions of every discrete type of polymerized high $T_g$ monomer unit in the oligomer.

In embodiments, the oligomer may comprise, based on the total weight of the oligomer, from 3% to 44% by weight of the polymerized high $T_g$ monomer units. In embodiments, the oligomer may comprise, based on the total weight of the oligomer, equal to or greater than 1%, equal to or greater than 3 %, equal to or greater than 5 %, equal to or

greater than 15 wt%, or even equal to or greater than 25 wt%, by weight polymerized high $T_g$ monomer units. In embodiments, the oligomer may comprise, based on the total weight of the oligomer, equal to or less than 80%, equal to or less than 70%, equal to or less than 60%, equal to or less than 50%, equal to or less than 44%, equal to or less than 30%, or even equal to or less than 20%, by weight polymerized high $T_g$ monomer units. In embodiments, the amount, by weight, of polymerized high $T_g$ monomer units in the oligomer, based on the total weight of the oligomer, may be from 1% to 80%, from 1% to 70%, from 1% to 60%, from 1% to 50%, from 1% to 44%, from 1% to 30%, from 1% to 20%, from 3% to 80%, from 3% to 70%, from 3% to 60%, from 3% to 50%, from 3% to 44%, from 3% to 30%, from 3% to 20%, from 5% to 80%, from 5% to 70%, from 5% to 60%, from 5% to 50%, from 5% to 44%, from 5% to 30%, from 5% to 20%, from 15% to 80%, from 15% to 70%, from 15% to 60%, from 15% to 50%, from 15% to 44%, from 15% to 30%, from 15% to 20%, from 25% to 80%, from 25% to 70%, from 25% to 60%, from 25% to 50%, from 25% to 44%, or even from 25% to 30%, or any and all subranges formed from any of these endpoints.

Low $T_g$ Monomer Units

The oligomers disclosed herein include low $T_g$ monomer units. The polymerized low-$T_g$ monomer units may be identical or a combination of multiple types of discrete monomer units such as two types of discrete monomer units, three types of discrete monomer units, four types of discrete monomer units, or more than four types of discrete monomer units. In embodiments, the low $T_g$ monomer units may have a glass transition temperature ($T_g$) less than 25 °C. As defined herein, any reference herein to the $T_g$ of a monomer refers to the $T_g$ of a homopolymer formed from that monomer. In embodiments, the low $T_g$ monomer units may have a $T_g$ equal to or less than 25 °C or a Fox Equation average $T_g$ less than 25 °C. As defined herein, any reference herein to the $T_g$ of a monomer refers to the $T_g$ of a homopolymer formed from that monomer. In embodiments where the oligomer comprises two or more distinct low-$T_g$ monomer units, the $T_g$ refers to the Fox Equation average $T_g$ of the low-$T_g$ monomer units, as defined previously herein. In embodiments, the low-$T_g$ monomer units have a Fox Equation average $T_g$ of less than 25 °C, such as less than 20 °C, less than 15 °C, less than 10 °C, less than 5 °C, less than 0 °C, less than -5 °C, less than -10 °C, less than -15 °C, less than -20 °C, or less than -30 °C.

In further embodiments, the the low $T_g$ monomer units may have a Fox Equation average $T_g$ equal to or greater than -150 °C, equal to or greater than -125 °C, equal to or greater than -100 °C, equal to or greater than -80 °C, or even equal to or greater than -60 °C. In embodiments, the low $T_g$ monomer units may have a $T_g$ from -150 °C to 25 °C, from -150 °C to 20 °C, from -125 °C to 15 °C, from -125 °C to 10 °C, from -125 °C to 5 °C, from -125 °C to 0 °C, from -125 °C to -5 °C, from -125 °C to -10 °C, from -125 °C to -15 °C, from -125 °C to -20 °C, from -125 °C to -30 °C, from -125 °C to 25 °C, from -125 °C to 20 °C, from -125 °C to 15 °C, from -125 °C to 10 °C, from -125 °C to 5 °C, from -125 °C to 0 °C, from -125 °C to -5 °C, from -125 °C to -10 °C, from -125 °C to -15 °C, from -125 °C to -20 °C, from -125 °C to -30 °C, from -100 °C to 25 °C, from -100 °C to 20 °C, from -100 °C to 15 °C, from -100 °C to 10 °C, from -100 °C to 5 °C, from -100 °C to 0 °C, from -100 °C to -5 °C, from -100 °C to -10 °C, from -100 °C to -15 °C, from -100 °C to -20 °C, from -100 °C to -30 °C, from -80 °C to 25 °C, from -80 °C to 20 °C, from -80 °C to 15 °C, from -80 °C to 10 °C, from -80 °C to 5 °C, from -80 °C to 0 °C, from -80 °C to -5 °C, from -80 °C to -10 °C, from -80 °C to -15 °C, from -80 °C to -20 °C, from -80 °C to -30 °C, from -60 °C to 25 °C, from -60 °C to 20 °C, from -60 °C to 15 °C, from -60 °C to 10 °C, from -60 °C to 5 °C, from -60 °C to 0 °C, from -60 °C to -5 °C, from -60 °C to -10 °C, from -60 °C to -15 °C, from -60 °C to -20 °C, or even -60 °C to -30 °C, or any and all subranges formed from any of these endpoints.

In embodiments, the low Tg monomer units may be monovalent. In embodiments, the low $T_g$ monomer units may include (meth)acrylate monomers, including acrylate monomers and methacrylate monomers. Examples of acrylate monomers include sec-butyl acrylate monomers and tert-butyl acrylate monomers. Examples of methacrylate monomers include butyl methacrylate monomers and pentyl methacrylate monomers.

In embodiments, each of the low $T_g$ monomer units may be according to formula (II):

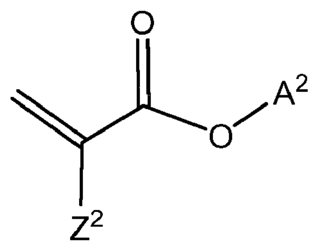

(II)

where:

$A^2$ is $(C_2\text{-}C_{30})$hydrocarbyl or $(C_2\text{-}C_{30})$heterohydrocarbyl; and
$Z^2$ is -H or $-CH_3$.

In embodiments, $A^2$ is linear or branched $(C_2\text{-}C_{30})$alkyl, or combinations thereof. In embodiments, $A^2$ is chosen from n-butyl, isobutyl, hexyl, 2-ethylhexyl, isooctyl, isodecyl, tridecyl, lauryl, or combinations thereof.

Further examples of low $T_g$ monomer units of the oligomer include, but are not limited to, monomer units chosen from n-butyl (meth)acrylate, isobutyl (meth)acrylate, hexyl (meth)acrylate, 2-ethylhexyl (meth)acrylate, isooctyl (meth)acrylate, isodecyl (meth)acrylate, tridecyl (meth)acrylate, lauryl (meth)acrylate, nonyl acrylate, decyl (meth)acrylate, hexyl (meth)acrylate, dodecyl (meth)acrylate, butyl acrylate, 2-ethylhexyl acrylate, octyl (meth)acrylate, propyl acrylate, 4-cyanobutyl acrylate, isobutyl acrylate, 2,2,3,3-tetrafluoropropyl acrylate, ethyl acrylate, sec-butyl acrylate, dodecyl acrylate, tetrahydro furfuryl acrylate, tetradecyl (meth)acrylate, isopropyl acrylate, pentyl (meth)acrylate, 2-cyanoethyl acrylate, benzyl acrylate, phenoxyethyl acrylate, cyclohexyl acrylate, hexadecyl (meth)acrylate, 1-(dimethylamino)ethyl (meth)acrylate, 1-(diethylamino)ethyl (meth)acrylate, cyanomethyl acrylate, 2-methyl butyl acrylate, 2-octyl acrylate, or combinations thereof.

The weight fraction of the polymerized low $T_g$ monomer units in the oligomer will vary depending on desired properties of the oligomer, such as $T_g$, molecular weight, and gel content after curing. In embodiments, the oligomer may comprise, based on a total weight of the oligomer, from 10% to 98.9% by weight polymer low $T_g$ monomer units. It should be understood that, when the oligomer includes more than one discrete type of polymerized low $T_g$ monomer unit, the weight fraction of the polymerized low $T_g$ monomer units in the oligomer equals the sum of the individual weight fractions of every discrete type of polymerized low $T_g$ monomer unit in the oligomer.

In embodiments, the oligomer may comprise, based on a total weight of the oligomer, from 55% to 95% by weight polymer low $T_g$ monomer units. In embodiments, the oligomer may comprise, based on the total weight of the oligomer, equal to or greater than 10%, equal to or greater than 20%, equal to or greater than 30%, equal to or greater than 40%, equal to or greater than 50%, equal to or greater than 55%, equal to or greater than 70%, or even equal to or greater than 80%, by weight polymer low $T_g$ monomer units. In embodiments, the oligomer may comprise, based on the total weight of the oligomer, equal to or less than 98.9%, equal to or less than 97%, equal to or less than 95%, equal to or less than 85%, or even equal to or less than 75%, by weight polymer low $T_g$ monomer units. In embodiments, the amount, by weight, of polymerized high $T_g$ monomer units in the oligomer, based on the total weight of the oligomer, from 10% to 98.9%, from 10% to 97%, from 10% to 95%, from 10% to 85%, from 10% to 75%, from 20% to 98.9%, from 20% to 97%, from 20% to 95%, from 20% to 85%, from 20% to 75%, from 30% to 98.9%, from 30% to 97%, from 30% to 95%, from 30% to 85%, from 30% to 75%, from 40% to 98.9%, from 40% to 97%, from 40% to 95%, from 40% to 85%, from 40% to 75%, from 50% to 98.9%, from 50% to 97%, from 50% to 95%, from 50% to 85%, from 50% to 75%, from 55% to 98.9%, from 55% to 97%, from 55% to 95%, from 55% to 85%, from 55% to 75%, from 70% to 98.9%, from 70% to 97%, from 70% to 95%, from 70% to 85%, from 70% to 75%, from 80% to 98.9%, from 80% to 97%, from 80% to 95%, or even from 80% to 85%, or any and all subranges formed from any of these endpoints.

The weight ratio of low $T_g$ monomer units to high $T_g$ monomer units may be adjusted depending on desired properties of the oligomer, such as $T_g$ and gel content after curing. In embodiments, the weight ratio of low $T_g$ monomer units to high $T_g$ monomer units in the oligomer may be from 24:1 to 1.5:1, from 20:1 to 1.5:1, from 15:1 to 1.5:1, from 10:1 to 1.5:1, 24:1 to 3:1, from 20:1 to 3:1, from 15:1 to 3:1, from 10:1 to 3:1, 24:1 to 5:1, from 20:1 to 5:1, from 15:1 to 5:1, or even from 10:1 to 5:1, or any and all subranges formed from any of these endpoints.

Chromophore Monomer Units

In addition to a combination of at least one polymerized high-$T_g$ monomer unit and at least one polymerized low-$T_g$ monomer unit, the oligomers further include at least one polymerized chromophore monomer unit. The polymerized chromophore monomer units may act as a photoinitiator and induce curing of the oligomer upon radiation. A photoinitiator is generally a moiety that, on absorption of light, generates reactive species (ions or radicals) and initiates one or several chemical reactions or transformations.

Photoinitiators may include free-radical photoinitiators. The photoinitiator may be selected so that it is susceptible to activation by photons of the wavelength associated with the actinic radiation (e.g., ultraviolet radiation, visible light) intended to be used to cure a curable composition. Norrish Type II (i.e., non-cleavable) photoinitiator moieties do not break down upon excitation, thus providing fewer possibilities for the leaching of small molecules from the matrix composition. For reference, see e.g. A. Gilbert, J. Baggott: "Essentials of Molecular Photochemistry", Blackwell, London, 1991). Excited non-cleavable photoinitiators do not break down to radicals upon excitation, but extract a hydrogen atom from an organic molecule or, more efficiently, extract an electron from an electron donor (such as an amine or a thiol). The electron transfer produces a radical anion on the photoinitiator and a radical cation on the electron donor. This is followed by proton transfer from the radical cation to the radical anion to produce two uncharged radicals; of these the radical on the electron donor is sufficiently reactive to abstract a hydrogen atom from most substrates.

The photoinitiator may be a chromophore. Benzophenones and related ketones such as thioxanthones, xanthones, anthraquinones, fluorenones, dibenzosuberones, benzils, and phenyl ketocoumarins are examples of Norrish Type II chromophores. Most amines with a C-H bond in α-position to the nitrogen atom and many thiols are electron donors. Some titanocenes are Norrish Type II chromophores within the scope of the chromophore monomers herein.

In embodiments, the polymerized chromophore monomer units are (meth)acrylate monomers having a pendent Norrish Type II chromophore. That is, the Norrish Type II chromophore is not positioned on the terminal ends of the monomers.

Any of the above-discussed Norrish Type II chromophores may be the pendent moiety of the chromophore monomer units of oligomer. In embodiments, the Norrish Type II chromophore is chosen from benzophenones, thioxanthones, or titanocenes.

In embodiments, each of the chromophore monomer units may be according to formula (III):

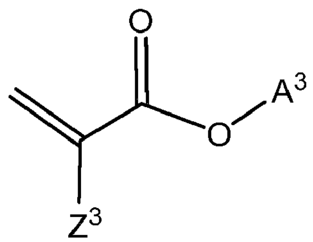

(III).

In embodiments, $A^3$ of formula (III) is X or -L-X, where L is a $(C_1\text{-}C_{10})$heterohydrocarbylene linker and X is a monovalent residue of the Norrish Type II chromophore. In other embodiments, $A^3$ is a monovalent residue of the Norrish Type II chromophore. In embodiments, X may be a monovalent residue of any one of the above-discussed Norrish Type II chromophores. In embodiments, $A^3$ is a monovalent residue of benzophenone. In embodiments, $A^3$ has formula (IV):

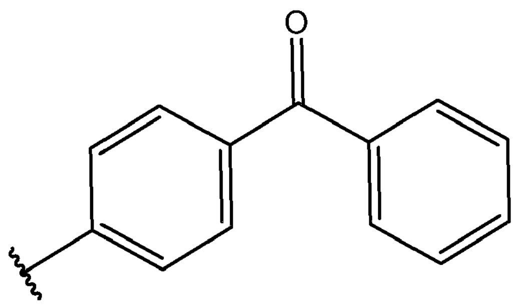

(IV).

In embodiments, $Z^3$ of formula (III) is -H or $-CH_3$.

Examples of suitable chromophore monomer units may include, but not be limited to (meth)acrylates of Norrish Type II photoinitiators such as benzophenone or thioxanthone.

In embodiments, $A^3$ of formula (III) is a residue comprising a monovalent radical comprising a moiety chosen from a thioxanthone, an anthraquinone, or a camphorquinone. According to one or more embodiments, $A^3$ is a residue comprising a monovalent radical comprising a thioxanthone.

In particular, $A^3$ of formula (III) may have the following formula (V) or (VI):

| | |
|---|---|
| 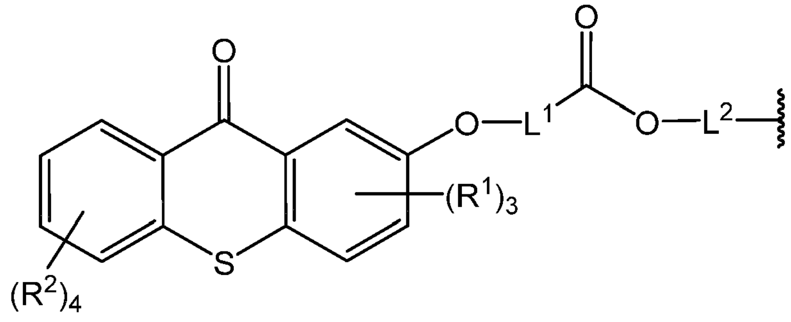 | (V) |

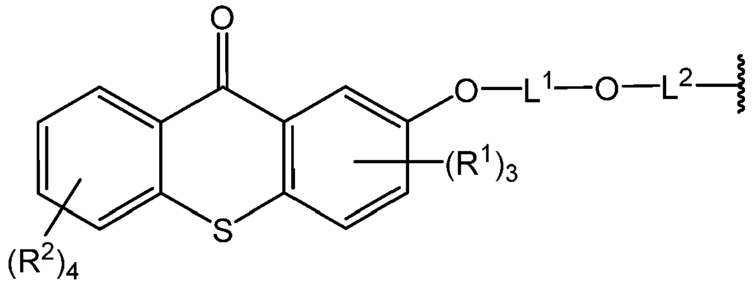

(VI)

wherein, in formula (V) and formula (VI):

$L^1$ is an alkylene;

$L^2$ is a divalent linker comprising at least 2 carbon atoms;

each $R^1$ and $R^2$ are independently selected from -H, halogen, alkyl, cycloalkyl, heterocycloalkyl, alkoxy, aryloxy, thioalkyl, thioaryl, alkenyl, alkynyl, aryl, aralkyl, alkaryl, heteroaryl, -C(=O)$R^a$, -N$R^b$$R^c$, alkylamino, alkylthiol, haloalkyl, -$NO_2$, -CN, -C(=O)O$R^d$, -C(=O)N$R^b$$R^c$;

$R^a$ is selected from an optionally substituted alkyl, an optionally substituted cycloalkyl, an optionally substituted heterocycloalkyl and an optionally substituted aryl;

$R^b$, $R^c$ and $R^d$ are independently selected from -H, alkyl and aryl;

In particular, in formula (V) and formula (VI), $R^1$ and $R^2$ are independently -H, halogen, alkyl or alkoxy. More particularly, $R^1$ and $R^2$ are independently H or alkyl. Even more particularly $R^1$ and $R^2$ are independently H or methyl. More particularly still, $R^1$ and $R^2$ are all -H.

In formula (V) and formula (VI), $L^1$ is an alkylene. In particular, each $L^1$ may independently be a linear or branched alkylene having from 1 to 6, from 1 to 4 or from 1 to 2 carbon atoms. More particularly, $L^1$ is -$CH_2$- or -CH($CH_3$)-. Even more particularly, $L^1$ is -$CH_2$-.

In formula (V) and formula (VI), $L^2$ is a divalent linker comprising at least 2 carbon atoms. $L^2$ may be an aromatic, aliphatic or cycloaliphatic hydrocarbon linker, a polyether linker, a polyester linker, a polycarbonate linker, a polycaprolactone linker, a polyurethane linker, a polyorganosiloxane linker, a polybutadiene linker, and combinations thereof. In particular, $L^2$ may be selected from an aromatic, aliphatic or cycloaliphatic hydrocarbon linker, a polyether linker, a polyester linker and combinations thereof.

In formula (V) and formula (VI), $L^2$ may be -$CH_2$-CH(OH)-$CH_2$- or the residue of a diol. As used herein, the term "residue of a diol" means the linker obtained by removing two OH groups from a diol. Examples of suitable diols include 1,3-propylene glycol, 1,3- or 1,4-butylene glycol, 1,5-pentanediol, 1,6-hexanediol, 1,8-octanediol, 1,9-nonanediol, 1,10-decanediol, 1,12-dodecanediol, 2-methyl-1,3-propanediol, 2,2-diethyl-1,3-propanediol, 3-methyl-1,5-pentanediol, 3,3-dimethyl-1,5-pentanediol, neopentyl glycol, 2,4-diethyl-1,5-pentanediol, cyclohexanediol, cyclohexane-1,4-dimethanol, norbornene dimethanol, norbornane dimethanol, tricyclodecanediol, tricyclodecane dimethanol, bisphenol A, B, F or S, hydrogenated bisphenol A, B, F or S, di-, tri- or tetraethylene glycol, di-, tri- or tetrapropylene glycol, di-, tri- or tetrabutylene glycol, a polyethylene glycol, a polypropylene glycol, a polytetramethylene glycol, a poly(ethylene glycol-co-propylene glycol), a dianhydrohexitol (i.e. isosorbide, isomannide, isoidide), a polybutadiene polyol, a polyester polyol, a polyether polyol, a polyorganosiloxane polyol, a polycarbonate polyol as well as the alkoxylated (e.g., ethoxylated and/or propoxylated) derivatives thereof and the derivatives obtained by ring-opening polymerization of ε-caprolactone initiated with one of the aforementioned polyols.

In formula (V) and formula (VI), $L^2$ may be $-CH_2-CH(OH)-CH_2-$ or a divalent linker selected from one of formulas (A)-(E):

$$-(CR^{22}R'^{22})_a \qquad (A)$$

$$-[(CR^{23}R'^{23})_b-O]_c-(CR^{23}R'^{23})_b- \qquad (B)$$

$$-[(CR^{24}R'^{24})_d-O]_e-(CR^{25}R'^{25})_f-[O-(CR^{26}R'^{26})_{d'}]_{e'}- \qquad (C)$$

$$-[(CR^{27}R'^{27})_g-C(=O)O]_h-(CR^{28}R'^{28})_i- \text{ or } -(CR^{28}R'^{28})_i-[(CR^{27}R'^{27})_g-C(=O)O]_h- \qquad (D)$$

$$-[(CR^{29}R'^{29})_j-O-C(=O)-(CR^{30}R'^{30})_k-C(=O)-O]_l-(CR^{29}R'^{29})_j- \qquad (E)$$

wherein

$R^{22}$, $R'^{22}$, $R^{25}$, $R'^{25}$, $R^{29}$, $R'^{29}$, $R^{30}$ and $R'^{30}$ are independently H or alkyl;

$R^{23}$, $R'^{23}$, $R^{24}$, $R'^{24}$, $R^{26}$, $R'^{26}$, $R^{27}$, $R'^{27}$, $R^{28}$ and $R'^{28}$ are independently H or methyl;

a is 2 to 20;

b, d, and d' are independently 2 to 4;

c is 1 to 20;

e and e' are independently 0 to 20 with the proviso that at least one of q and

q' is not 0 ;

f is 2 to 20;

g is 3 to 12;

h is 1 to 20;

i is 2 to 8;

j is 2 to 20;

k is 2 to 30;

l is 1 to 20.

In particular, in formula (V) and formula (VI), $L^2$ may be $-CH_2-CH(OH)-CH_2-$ or a divalent linker selected from an alkylene such as 1,3-propanediyl, 1,3- or 1,4-butanediyl, 1,5-pentanediyl, 1,6-hexanediyl, 1,8-octanediyl, 1,9-nonanediyl, 1,10-decanediyl, 1,12-decanediyl, 2-methyl-1,3-propanediyl, 2,2-diethyl-1,3-propanediyl, 3-methyl-1,5-pentanediyl, 3,3-dimethyl-1,5-pentanediyl, 2,2-dimethyl-1,3-propanediyl, 2,4-diethyl-1,5-pentanediyl; an alkoxylated (in particular an ethoxylated and/or propoxylated) derivative of the aforementioned alkylenes; an esterified (in particular by ring-opening polymerization of a lactone such as ε-caprolactone) derivative of the aforementioned alkylenes; a residue of a di-, tri-, tetra- or polyoxyalkene without the OH groups such as di-, tri- or tetraethylene glycol, di-, tri- or tetrapropylene glycol, di-, tri- or tetrabutylene glycol, polyethylene glycol, polypropylene glycol, polybutylene glycol, poly(ethylene glycol-co-propylene glycol).

In some embodiments, $A^3$ of formula (III) is according to one of the following formulas (Va) or (Vb):

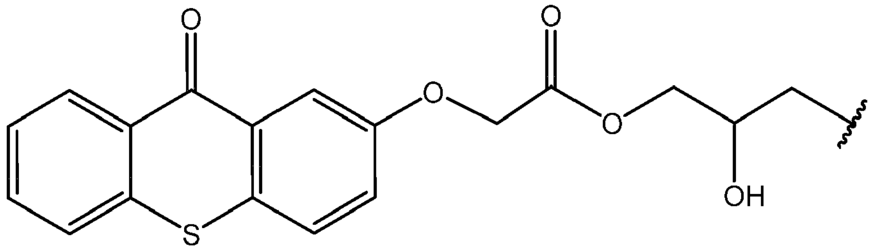

(Va)

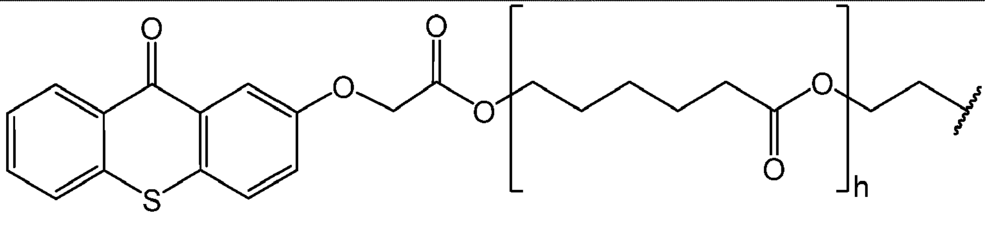

(Vb)

wherein h is 1 to 20.

Other suitable linker groups may be used be used, including others not including a carbonyl group

The weight fraction of the polymerized chromophore monomer units in the oligomer will vary depending on factors that are known in the art, such as desired cure time among other factors. In embodiments, the oligomer may comprise, based on the total weight of the oligomer, at least 0.1% by weight polymerized chromophore units to ensure improved peel strength. In embodiments, the oligomer may comprise, based on the total weight of the oligomer, from 0.1% to 40% by weight polymerized chromophore monomer units. It should be understood that, when the oligomer includes more than one discrete type of polymerized chromophore monomer unit, the weight fraction of the polymerized chromophore monomer units in the oligomer equals the sum of the individual weight fractions of every discrete type of polymerized chromophore monomer unit. Furthermore, it should be understood that, even if a chromophore monomer unit may be characterized based on $T_g$ alone as a high $T_g$ monomer or a low $T_g$ monomer, any monomer including a pendant chromophore is considered to be neither a high $T_g$ monomer nor a low $T_g$ monomer with respect to calculating the weight fractions of the various monomers the oligomer of formula (I).

In embodiments, the oligomer may comprise, based on the total weight of the oligomer, from 0.1% to 2% by weight polymerized chromophore monomer units. In embodiments, the oligomer may comprise, based on the total weight of the oligomer, equal to or greater than 0.1%, equal to or greater than 0.25%, equal to or greater than 0.5%, or even equal to or greater than 1%, by weight polymerized chromophore monomer units. In embodiments, the oligomer may comprise, based on the total weight of the oligomer, equal to or less than 40%, equal to or less than 30%, equal to or less than 20%, equal to or less than 10%, equal to or less than 5%, equal to or less than 2%, or even equal to or less than 1%, by weight polymerized chromophore monomer units. In embodiments, the amount, by weight, of polymerized chromophore monomer units in the oligomer, based on the total weight of the oligomer, may be from 0.1% to 40%, from 0.1% to 30%, from 0.1% to 20%, from 0.1% to 10%, from 0.1% to 5%, from 0.1% to 2%, from 0.1% to 1%, from 0.25% to 40%, from 0.25% to 30%, from 0.25% to 20%, from 0.25% to 10%, from 0.25% to 5%, from 0.25% to 2%, from 0.25% to 1%, from 0.5% to 40%, from 0.5% to 30%, from 0.5% to 20%, from 0.5% to 10%, from 0.5% to 5%, from 0.5% to 2%, from 0.5% to 1%, from 1% to 40%, from 1% to 30%, from 1% to 20%, from 1% to 10%, from 1% to 5%, or even from 1% to 2%, or any and all subranges formed from any of these endpoints.

Additional Monomer Units

The oligomers disclosed herein optionally include at least one polymerized additional monomer units. The additional monomer units can include monomer units that are copolymerized with the high-$T_g$ monomer units, the low-$T_g$ monomer units, and the chromophore monomer units. In embodiments, additional monomer units can include acrylic monomer units, such as vinyl amides, vinyl ethers, vinyl esters. In embodiments, the additional monomer units can include other monomer units that are polymerized in the oligomer such as styrene derivatives and maleimides.

In embodiments, the additional monomer units can comprise epoxy, ether, ester, acid, or ketone functionality that are not polymerized in the oligomer. For example, the additional monomer units may comprise a caprolactone-extended acrylate (SR49B, Sartomer), cyclictrimethylolpropane formal acrylate (SR531, Sartomer) propoxylated tetrahydrofurfuryl acrylate (SR611, Sartomer), beta-carboxyethylacrylate, glycidyl methacrylate, or 2-(2-ethoxyethoxy)ethyl

acrylate (SR256).

In embodiments, the additional monomer units can be a monomer that acts synergistically with the polymerized chromophore monomer units and/or reduce oxygen inhibition. Oxygen inhibition may limit surface curing and hence limit the performances of a resulting cured product.

Common synergist functionality that functions as a synergist for a Type II photoinitiator may include tertiary amine functionality, alkylenoxy functionality, mercaptan groups, or other sources of readily abstractable hydrogen. Typical addditional monomer units which contain synergist functionality are exemplified by monomers such as dimethylaminoethylacrylate (DMAEMA), dimethylaminoethylmethacrylate (DMAEA), N-vinylpyrrolidone (NVP), N-vinylcaprolactam (VCAP), acryloxymorpholine (ACMO), dimethyl acrylamide (DMAC), and poly(ethylenoxide)monoacrylate.

In embodiments, the additional monomer units can comprise an amine synergist. Some examples of amine synergists include tertiary amines. When an amine-synergist containing monomer is included in the oligomer in conjunction with the Norrish Type II chromophore of the polymerized chromophore monomer unit, the tertiary amine provides an active hydrogen donor site for the excited triple state of the chromophore, thus producing a reactive alkyl-amino radical that subsequently can initiate polymerization. Tertiary amines are also able to convert unreactive peroxy species, formed by reaction between oxygen and free radicals, to reactive alkyl-amino radicals, thus reducing the effects of oxygen on curing.

In embodiments, the additional monomer units may be chosen from (meth)acrylatemonomers having a pendent amine functionality. In embodiments, the additional monomer units are (meth)acrylate monomers having a pendent amine functionality.

Examples of amine synergists that may be the additional monomer of the oligomer include, but are not limited to, dimethylaminoethyl acrylate, dimethylaminoethylmethacrylate, diethylaminoethyl acrylate, acryloylmorpholine, dimethylacrylamide, monoacrylated poly ethylene glygol, monoacrylated propylene glycol, N-vinylpyrrolidone , or combinations thereof. Further examples of suitable amine synergists that may be the additional monomer of the oligomer include low-molecular weight tertiary amines (i.e. tertiary amines having a molecular weight of less than 200 g/mol) such as triethanol amine, N-methyldiethanol amine. Other types of amine synergists are aminobenzoates, polymerizable aminobenzoates, polymeric aminobenzoates, and mixtures thereof. Examples of aminobenzoates include ethyl 4-(dimethylamino)benzoate (EDB), pentyl 4-(dimethylamino)benzoate, 2-ethylhexyl 4-(dimethylamino)benzoate and 2-butoxyethyl 4-(dimethylamino)benzoate (BEDB).

In embodiments, the additional monomer units are (meth)acrylate monomers having a pendent amine functionality.

Any of the above-discussed synergists or amine-based synergists may be the pendent residue in the additional monomer units of the oligomers herein.

The weight fraction of the polymerized additional monomer units in the oligomer will vary depending on factors well-known in the art, such as desired cure time and desired extent of cure. In embodiments, the oligomer may comprise, based on the total weight of the oligomer, from 0% to 20% by weight polymerized additional monomer units. In embodiments, the oligomer may comprise, based on the total weight of the oligomer, equal to or greater than 0%, equal to or greater than 0.5%, equal to or greater than 1%, or even equal to or greater than 3%, by weight polymerized additional monomer units. In embodiments, the oligomer may comprise, based on the total weight of the oligomer, equal to or less than 20%, equal to or less than 15%, equal to or less than 10%, or even equal to or less than 5%, by weight polymerized additional monomer units. In embodiments, the amount, by weight, of polymerized additional monomer units in the oligomer, based on the total weight of the oligomer, may be from 0% to 20%, from 0% to 15%, from 0% to 10%, from 0% to 5%, from 0.5% to 20%, from 0.5% to 15%, from 0.5% to 10%, from 0.5% to 5%, from 1% to 20%, from 1% to 15%, from 1% to 10%, from 1% to 5%, from 3% to 20%, from 3% to 15%, from 3% to 10%, or even from 3% to 5%, or any and all subranges formed from any of these endpoints.

Low Viscosity Reactive Diluent

The curable compositions disclosed herein include a low viscosity reactive diluent, which may be used with or completely replace a solvent.

In embodiments, the low viscosity reactive diluent may have a viscosity equal to or less than 3000 cP, as measured by Brookfield DV-III viscometer using Spindle SC-27 at 25 °C, such as equal to or less than 2750 cP, equal to or less than 2500 cP, equal to or less than 2250 cP, equal to or less than 2000 cP, equal to or less than 1750 cP, equal to or less than 1500 cP, or even equal to or less than 1250. In embodiments, the low viscosity reactive diluent may have a viscosity equal to or greater than 5 cP, as measured by Brookfield DV-III viscometer using Spindle SC-27 at 25 °C, such as equal to or greater than 25 cP, equal to or greater than 50 cP, equal to or greater than 100 cP, equal to or greater than 250 cP, equal to or greater than 500 cP, equal to or greater than 750 cP, or even equal to or greater than 1000 cP. In embodiments, the low viscosity reactive diluent may have a viscosity, as measured by Brookfield DV-III viscometer using Spindle SC-27 at 25 °C, from 25 cP to 3000 cP, from 25 cP to 2750 cP, from 25 cP to 2500 cP, from

25 cP to 2250 cP, from 25 cP to 2000 cP, from 25 cP to 1750 cP, from 25 cP to 1500 cP, from 25 cP to 1250 cP, from 25 cP to 3000 cP, from 25 cP to 2750 cP, from 25 cP to 2500 cP, from 25 cP to 2250 cP, from 25 cP to 2000 cP, from 25 cP to 1750 cP, from 25 cP to 1500 cP, from 25 cP to 1250 cP, from 50 cP to 3000 cP, from 50 cP to 2750 cP, from 50 cP to 2500 cP, from 50 cP to 2250 cP, from 50 cP to 2000 cP, from 50 cP to 1750 cP, from 50 cP to 1500 cP, from 50 cP to 1250 cP, from 100 cP to 3000 cP, from 100 cP to 2750 cP, from 100 cP to 2500 cP, from 100 cP to 2250 cP, from 100 cP to 2000 cP, from 100 cP to 1750 cP, from 100 cP to 1500 cP, from 100 cP to 1250 cP, from 250 cP to 3000 cP, from 250 cP to 2750 cP, from 250 cP to 2500 cP, from 250 cP to 2250 cP, from 250 cP to 2000 cP, from 250 cP to 1750 cP, from 250 cP to 1500 cP, from 250 cP to 1250 cP, from 500 cP to 3000 cP, from 500 cP to 2750 cP, from 500 cP to 2500 cP, from 500 cP to 2250 cP, from 500 cP to 2000 cP, from 500 cP to 1750 cP, from 500 cP to 1500 cP, from 500 cP to 1250 cP, from 750 cP to 3000 cP, from 750 cP to 2750 cP, from 750 cP to 2500 cP, from 750 cP to 2250 cP, from 750 cP to 2000 cP, from 750 cP to 1750 cP, from 750 cP to 1500 cP, from 750 cP to 1250 cP, from 1000 cP to 3000 cP, from 1000 cP to 2750 cP, from 1000 cP to 2500 cP, from 1000 cP to 2250 cP, from 1000 cP to 2000 cP, from 1000 cP to 1750 cP, from 1000 cP to 1500 cP, or even from 1000 cP to 1250 cP, or any and all subranges formed from any of these endpoints.

In embodiments, the low viscosity reactive diluent may comprise a low viscosity (meth)acrylate monomer. For example, the low viscosity reactive diluent may comprise isodecyl acrylate, alkoxylated tetrahydrofurfuryl acrylate, ditrimethylolpropane tetraacrylate, octyl acrylate, decyl acrylate, PEG mono(meth)acrylates, isooctyl acrylate, caprolactone acrylate, tridecyl acrylate, alkoxylated neopentyl glycol diacrylate, alkoxylate lauryl acrylate, alkoxylate phenol acrylate, tridecyl methacrylate, lauryl acrylate, ethoxylated nonylphenol acrylate, ethoxylated phenol acrylate, glycerol methacrylate, or combinations thereof.

The amount of low viscosity reactive diluent in the curable composition will vary depending on the desired viscosity. In embodiments, the curable composition may comprise, based on a weight of the curable composition, from 20% to 80% by weight of the low viscosity reactive diluent. In embodiments, the curable composition may comprise, based on a weight of the curable composition, equal to or greater than 20%, equal to or greater than 25%, equal to or greater than 30%, equal to or greater than 35%, or even equal to or greater than 40%, by weight of the low viscosity reactive diluent. In embodiments, the curable composition may comprise, based on a weight of the curable composition, equal to or less than 80%, equal to or less than 75%, equal to or less than 70%, equal to or less than 65%, or even equal to or less than 60%, by weight of the low viscosity reactive diluent. In embodiments, the amount by weight of the low viscosity reactive diluent in the curable composition, based on the total weight of the curable composition, may be from 20% to 80%, from 20% to 75%, from 20% to 70%, from 20% to 75%, from 20% to 60%, from 25% to 80%, from 20% to 75%, from 25% to 70%, from 25% to 75%, from 25% to 60%, from 30% to 80%, from 30% to 75%, from 30% to 70%, from 30% to 75%, from 30% to 60%, from 35% to 80%, from 35% to 75%, from 35% to 70%, from 35% to 75%, from 35% to 60%, from 40% to 80%, from 40% to 75%, from 40% to 70%, from 40% to 75%, or even from 40% to 60%, or any and all subranges formed from any of these endpoints.

In embodiments, a weight ratio of the oligomer to the low viscosity reactive diluent in the curable composition may be from 4:1 to 1:4, such as from 3:1 to 1:4, from 2:1 to 1:4, from 1:1 to 1:4, from 3:1 to 1:3, from 2:1 to 1:3, from 1:1 to 1:3, from 3:1 to 1:2, from 2:1 to 1:2, from 1:1 to 1:2, from 3:1 to 1:1, or even from 2:1 to 1:1, or any and all subranges formed from any of these endpoints.

Curable Composition

In embodiments, the curable compositions may have a glass transition temperature $T_g$ of about 20 °C or less when cured or about 10 °C or less when cured. In embodiments, the curable compositions may be liquid at a temperature of 25 °C $\pm$ 2 °C. In embodiments, the curable composition may have a viscosity, as measured at 60 °C, of equal to or less than 50,000 cP, such as equal to or less than 45,000 cP, equal to or less than 40,000 cP, equal to or equal than 35,000 cP, equal to or less than 30,000 cP, equal to or less than 25,000 cP, equal to or less than 20,000 cP, 15,000 cP or less, 12,500 cP or less, or even 10,000 cP or less. Such viscosity features facilitate spreading of the composition on a substrate for film formation.

In embodiments, the curable compositions may comprise less than 1 wt % of solvent and less than 1 wt % of water or are free of solvent and are free of water. In embodiments, a film or coating may be formed by the curable composition.

In embodiments, methods of coating substrates may comprise applying the curable composition to a substrate and curing the curable composition, wherein the applying comprises applying the curable composition at ambient temperature. In embodiments, the substrate may be a high surface energy substrate, such as a metal or a low surface energy substrate, such as plastic. The substrate may be any commercially relevant substrate, such as a high surface energy substrate or a low surface energy substrate, such as a metal substrate or plastic substrate, respectively. The substrates may comprise stainless steel, paper, cardboard, glass, polyolefins, PET, PVC, PMMA, PC, composites and wood.

In embodiments, the curable composition may be applied to a substrate by spraying, knife coating, roller coating, casting, drum coating, dipping, and the like, and combinations thereof. In embodiments, the curing may comprise curing by exposure to one of the group consisting of visible radiation, UV radiation, LED radiation, laser radiation, electron-beam radiation, peroxide, accelerator and heat. In embodiments, the curing comprises combinations of these curing techniques.

In embodiments, a pressure sensitive adhesive may be made or prepared from the curable compositions described herein. In embodiments, a cured product may be made or prepared from the curable compositions described herein. In embodiments, use may be made of the curable compositions described herein in in adhesives, particularly pressure sensitive adhesives.

Embodiments of the curable compositions described herein may find use as an adhesive tape, an adhesive sheet, an adhesive spray, a product package, a product label, a construction article or a medical product and more particularly said pressure sensitive adhesive is for packaging, labelling, construction, model making, medicine and construction applications.

Additives

In embodiments, the curable composition may further comprise 0.1 wt% to 40 wt% of at least one tackifying resin. In embodiments, the at least one tackifying resin may have a softening temperature of 20 °C or less. In embodiments, the at least one tackifying resin may be selected from the group consisting of piperylene-based hydrocarbon resins which may be hydrogenated and hydrogenated or non-hydrogenated rosin esters, modified by maleic anhydride rosin esters.

The PSA systems may also optionally comprise other additives, such as an additive selected from the group consisting of, wetting agents, adhesion promoters, fillers, rheology modifiers, thixotropic agents, plasticizers, UV absorbers, UV stabilizing agents, dispersants, antioxidants, antistatic agents, lubricants, opacifying agents, anti-foam agents, rheology agents, and the like, and combinations thereof.

Within this specification, embodiments have been described in a way which enables a clear and concise specification to be written, but it is intended and will be appreciated that embodiments may be variously combined or separated without departing from the invention.

For example, it will be appreciated that all preferred features described herein are applicable to all aspects of the invention described herein.

Although the invention is illustrated and described herein with reference to specific embodiments, the invention is not intended to be limited to the details shown. Rather, various modifications may be made in the details within the scope and range of equivalents of the claims and without departing from the invention.

EXAMPLES

Material

The following materials were used in the examples:

[Table 1]

| Abbreviation | Chemical name | Supplier |
|---|---|---|
| BENZO | 4-acryloyloxy benzophenone | Sigma Aldrich Chemical Company |
| MEK | methyl ethyl ketone | Sigma Aldrich Chemical Company |
| BA | butyl acrylate | Sigma Aldrich Chemical Company |
| MMA | methyl (meth)acrylate | Sigma Aldrich Chemical Company |
| DMAEA | dimethylaminoethyl acrylate | Sigma Aldrich Chemical Company |
| DMAEMA | dimethylaminoethylmethacrylate | Sigma Aldrich Chemical Company |
| DEAEA | diethylaminoethyl acrylate | Sigma Aldrich Chemical Company |
| ACMO | acryloylmorpholine | Sigma Aldrich Chemical Company |
| NVP | n-vinyl-2-pyrrolidone | Sigma Aldrich Chemical Company |
| AA | acrylic acid | Sigma Aldrich Chemical Company |

(continued)

| Abbreviation | Chemical name | Supplier |
|---|---|---|
| HEEUMA | hydroxy ethyl ethylene urea (meth)acrylate | Sigma Aldrich Chemical Company |
| SR395 | isodecyl acrylate | Sarto mer |
| SR611 | alkoxylated tetrahydrofurfuryl acrylate | Sarto mer |
| SR355 | ditrimethylolpropane tetraacrylate | Sartomer |
| CN146 | acrylic oligomer | Sarto mer |
| CN147 | acidic acrylate oligomer | Sarto mer |

*Formulation*

Tables 2 and 3 below show the components (in weight percent) used to form the oligomer and certain properties of Comparative Examples C1 to C6 and Examples E1 to E26 Formulations were made by adding the components listed in Tables 2 and 3 to SR355 in a Flacktek® polypropylene cup and mixed until homogenous at 1500 rpm for two mintues using a Flacktek® DAC 400.2 VAC high-speed mixer.

For UV-curable pressure sensitive adhesives (UV-PSAs) examples, formulations were made by adding the components listed in Tables 2 and 3 to a 1:1 ratio of SR395/SR611 such that the final concentration of the oligomer to SR395/SR611 was 2:1:1 after MEK evaporation. The formulations were added to a Flacktek ® polypropylene cup and mixed until homogenous at 1500 rpm for two minutes using a Flacktek® DAC 400.2 VAC high-speed mixer.

[Table 2]

| Example | Backbone (wt%) | | Final MEK (wt%) | Predicted $T_g$ (°C) | Weight average molecular weight (Mw) |
|---|---|---|---|---|---|
| E1 | BA | 95 | 37.9 | -48 | 32522 |
| | MMA | 4 | | | |
| | BENZO | 1 | | | |
| E2 | BA | 80 | 42.5 | -26 | 23856 |
| | MMA | 15 | | | |
| | BENZO | 5 | | | |
| C1 | MMA | 99 | 32.8 | 109 | 14181 |
| | BENZO | 1 | | | |
| E3 | BA | 80 | 40.7 | -31 | 25162 |
| | TBA | 15 | | | |
| | BENZO | 5 | | | |
| E4 | BA | 95 | 53.4 | -49 | 21960 |
| | TBA | 4 | | | |
| | BENZO | 1 | | | |
| E5 | BA | 91.16 | 44.0 | -38 | 24958 |
| | MMA | 3.84 | | | |
| | BENZO | 5 | | | |
| C2 | BA | 54.5 | 50.0 | 0 | 19636 |
| | MMA | 44.5 | | | |
| | BENZO | 1 | | | |

(continued)

| Example | Backbone (wt%) | | Final MEK (wt%) | Predicted $T_g$ (°C) | Weight average molecular weight (Mw) |
|---|---|---|---|---|---|
| C3 | BA | 38.5 | 49.4 | 25 | 19092 |
| | MMA | 60.5 | | | |
| | BENZO | 1 | | | |
| C4 | BA | 25 | 50.1 | 50 | 16620 |
| | MMA | 74 | | | |
| | BENZO | 1 | | | |
| E6 | BA | 69.5 | 32.5 | -20 | 26563 |
| | MMA | 26.5 | | | |
| | BENZO | 1 | | | |
| E7 | BA | 62.5 | 50.0 | -13 | 33063 |
| | MMA | 36.5 | | | |
| | BENZO | 1 | | | |
| E8 | BA | 92.12 | 31.7 | -46 | 19131 |
| | MMA | 3.88 | | | |
| | BENZO | 1 | | | |
| | DMAEA | 3 | | | |
| E9 | BA | 92.12 | 29.0 | -46 | 16266 |
| | MMA | 3.88 | | | |
| | BENZO | 1 | | | |
| | DEAEA | 3 | | | |
| E10 | BA | 92.12 | 31.2 | -45 | 119308 |
| | MMA | 3.88 | | | |
| | BENZO | 1 | | | |
| | ACMO | 3 | | | |
| E11 | BA | 92.12 | 20.4 | -45 | 29053 |
| | MMA | 3.88 | | | |
| | BENZO | 1 | | | |
| | ACMO | 3 | | | |
| E12 | BA | 92.12 | 29.7 | -46 | 81787 |
| | MMA | 3.88 | | | |
| | BENZO | 1 | | | |
| | NVP | 3 | | | |
| E13 | BA | 92.12 | 36.0 | -46 | 21408 |
| | MMA | 3.88 | | | |
| | BENZO | 1 | | | |
| | DMAEMA | 3 | | | |

[Table 3]

| Example | Backbone (wt%) | | Number average molecular weight ($M_n$) |
|---|---|---|---|
| E1 | BA | 95 | 11629 |
| | MMA | 4 | |
| | BENZO | 1 | |
| E14 | BA | 95 | 32489 |
| | MMA | 4 | |
| | BENZO | 1 | |
| E15 | BA | 90 | 13657 |
| | MMA | 4 | |
| | BENZO | 1 | |
| | AA | 5 | |
| E16 | BA | 90 | 32102 |
| | MMA | 4 | |
| | BENZO | 1 | |
| | AA | 5 | |
| E17 | BA | 90 | 14988 |
| | MMA | 4 | |
| | BENZO | 1 | |
| | CN146 | 5 | |
| E18 | BA | 90 | 30908 |
| | MMA | 4 | |
| | BENZO | 1 | |
| | CN146 | 5 | |
| E19 | BA | 95 | 10212 |
| | MMA | 2 | |
| | BENZO | 1 | |
| | HEEUMA | 2 | |
| E20 | BA | 95 | 23802 |
| | MMA | 2 | |
| | BENZO | 1 | |
| | HEEUMA | 2 | |
| E21 | BA | 92.5 | 12613 |
| | MMA | 4 | |
| | BENZO | 1 | |
| | AA | 2.5 | |

(continued)

| Example | Backbone (wt%) | | Number average molecular weight ($M_n$) |
|---|---|---|---|
| E22 | BA | 92.5 | 47327 |
| | MMA | 4 | |
| | BENZO | 1 | |
| | AA | 2.5 | |
| C5 | BA | 94 | 10010 |
| | BENZO | 1 | |
| | AA | 5 | |
| C6 | BA | 94 | 28922 |
| | BENZO | 1 | |
| | AA | 5 | |
| E23 | BA | 90 | 17353 |
| | MMA | 4 | |
| | BENZO | 1 | |
| | CN147 | 5 | |
| E24 | BA | 90 | 37271 |
| | MMA | 4 | |
| | BENZO | 1 | |
| | CN147 | 5 | |
| E25 | BA | 97 | 10955 |
| | MMA | 1 | |
| | BENZO | 1 | |
| | HEEUMA | 1 | |
| E26 | BA | 97 | 32390 |
| | MMA | 1 | |
| | BENZO | 1 | |
| | HEEUMA | 1 | |

Methods

The following methods were used in the application:

*Method A - Gel Content*

The gel content of examples were measured by curing a 3MIL wet coating using an H bulb (small Fusion LC6, 15 fpm, three passes). The draw-down thickness depended on the final MEK percentage in the AcAc. For instance, the examples were provided as either 60% monomers and 40% MEK, or 50% monomers and 50% MEK. The examples having 40% MEK were drawn down from 5 MIL thick and the examples having 50% MEK were drawn down from 6 MIL thick such that after evaporation of MEK, the film thickness is 3 MIL.. After the draw-down, the glass slides were placed in a 60 °C oven for 1 hour to remove the solvent. The samples were cured in air or nitrogen. The samples were removed from the glass slides after curing and placed in a solution of MEK for 24 hours. Gel content was given as a percentage of the remaining weight of the sample after 24 hours of soaking in MEK as compared to the initial weight of the sample as given by the equation below.

$$Gel\ content\ (\%) = \frac{final\ weight}{initial\ weight} * 100$$

Referring now to FIG. 1, environment (i.e., air (shown in gray bars) or nitrogen (shown in black bars) had minimal effect on gel content. Example E6, an oligomer including 69.5 wt% BA, 26.5 wt% MMA, and 1 wt% BENZO, had a gel content of 67 wt% (air) and 79% (nitrogen). On the other hand, Comparative Example C2, an oligomer including 54.5 wt% BA, 44.5 wt% MMA, and 1 wt% BENZO, had a gel content of less than 5 wt% when cured in air and nitrogen. As exemplified by FIG. 1, gel content decreases as MMA, a high $T_g$ monomer unit, increases. Accordingly, the amount of polymerized high $T_g$ monomer units and polymerized low $T_g$ monomer units in the oligomer may be tailored to achieve a desired crosslinking amount, as indicated gel content.

Referring now to FIG. 2, the gel content of Examples E8-E13, oligomers including additional (synergist) monomer units, were comparable to Example E1, an oligomer not including additional (synergist) monomer units. While not wishing to be bound on theory, the additional (synergist) monomer units may not have as significant impact on gel content because the BENZO attached to the oligomer backbone was enough chromophore to fully crosslink the system, regardless of the additional (synergist) monomer units being present. Note that examples cured in air are shown in light gray bars and examples cured in nitrogen are shown in dark gray bars.

Referring now to FIG. 3, gel content was measured on different $M_w$ versions of Example E1 with different BENZO loadings on the oligomer back bone and in different environments (i.e., from left to right for each BENZO loading: 10k MW Air (light gray bar); 10k MW Nitrogen (dark gray bar); 26k MW Air (medium gray bar); 26k MW Nitrogen (black bar)). Gel content was higher for the higher Mw versions of each oligomer. Gel content steadily decreased as the amount of BENZO decreased, indicated that less chromophore is available to crosslink the system leading to a less crosslinked gel. As exemplified by FIG. 3, sufficient gel content (e.g., greater than 50%) may be achieved even when the BENZO amount is decreased to 0.5 wt%.

*Method B - Photo Differential Scanning Calorimetry (PhotoDSC)*

Examples were combined with SR355 in an initial weight ratio of oligomer: SR355 and were placed in a Tzero pan and residual solvent was flashed off in the oven. The initial weight ratio of the oligomer:SR355 was selected to achieve a 1:1 weight ratio of oligomer:SR355 after the solvent was flashed off. The samples were exposed to a broad spectrum UV light (100 mW/cm$^2$) for two minutes.

Referring now to FIG. 4, the cure speeds (i.e., time it took to reach peak maximum) of the examples indicated were recorded (shown by gray bars in FIG. 4). The heat flow area under each curve was measured along with the maximum temperature achieved during cure (shown in black bars in FIG. 4). As exemplified by FIG. 4, the cure speed increased as the amount of MMA increased. Accordingly, the amount of polymerized high $T_g$ monomer units and polymerized low $T_g$ monomer units in the oligomer may be tailored to achieve a desired cure speed. Moreover, all of Comparative Examples C2-C4 and Examples E1-E4, E6, and E7 induced crosslinking with SR355. However, Comparative Examples C2-C4 did not induce crosslinking with itself.

Referring now to FIG. 5, cures speeds of the indicated examples were recorded (shown by light gray bards in FIG. 5). The heat flow area under each curve was measured along with the maximum temperature achieved during cure (shown in dark gray bars in FIG. 5). Examples E8-E13, oligomers including additional (synergist) monomer units, had faster cures speeds than Example E1, an oligomer not including additional (synergist) monomer units. As exemplified in FIG. 10, incorporating additional synergist monomer units in the oligomer increases cure speed.

Referring now to FIG. 6, cure speeds were recorded for 10k Mw versions of Example E1 (shown in gray bars) and 26k versions of Example E1 (shown in black bars) with different amounts of BENZO. As the amount of BENZO decreased, the cure speed decreased. As exemplified by FIG. 11, the amount of BENZO in the oligomer may be tailored to achieve a desired cure speed.

*Method C -Peel Strength of UV Curable Pressure Sensitive Adhesives (UV-PSA)*

A 50 μm two-tape guide was used to draw down the examples and achieve a uniform film thickness. After drawn down, the films were placed in a 60 °C oven for one hour to allow the MEK solvent to be removed from the films. After drying, the films were subjected to Fusion H bulb curing at 15 fpm, three passes to crosslink the oligomer and form the UV-PSA. One inch strips were cut and the UV-PSA was laminated on to a stainless streel substrate. The UV-PSAs were allowed to age in a constant temperature room for 24 hours before testing. The 180° peel strength was measured in accordant with ASTM D3330 at 12 in/min using an Instron.

During 180° peel testing, the examples failed adhesively rather than cohesively. This means that the resulting peal strength was a measure of the examples being fully removed from the stainless streel substrate (adhesive failure)

versus resulting from a chemical bond failure within the example (cohesive failure)

Referring now to FIG. 7, Examples E8-E13, oligomers including additional (synergist) monomer units, had similar peel strengths as Example E1, an oligomer not including additional (synergist) monomer units. As exemplified by FIG. 12, additional (synergist) monomer units may be included in the oligomer and not have a significant effect on peel strength. Regarding E9, while not wishing to be bound by theory, the relatively high peel strength was due to over crosslinking of the oligomer.

Referring now to FIG. 8, Examples, E15, E16, and E21, oligomers including acrylic acid, had a higher peel strength as compared to Example E1, an oligomer not including acrylic acid. As exemplified by FIG. 13, acrylic acid may be included in the oligomer to improve the peel strength thereof.

Referring now to FIG. 9, the peel strength was measured for 10k Mw versions of Example E1 (shown in gray bars) and 26k versions of Example E1 (shown in black bars) with different amounts of BENZO. As shown, by decreasing the amount of BENZO to 0.25 wt% or 0.5 wt%, there was an increase in the peel strength. While not wishing to be bound by theory, the 1 wt% and 2 wt% BENZO examples had a lower peel strength due to the oligomer being over-crosslinked. Peel strength decreased significantly at BENZO amount less than or equal to 0.25 wt%. Note that the example with 0.25 wt% BENZO had a peel strength of 0.5 lbF at 10k $M_w$, but greater than 2 lbF at 26k $M_w$. This was due to the gel content at 10k Mw being less than 20%, while at 26k $M_w$ it was about 50% for the examples with 0.25% BENZO. As exemplified by FIG. 14, the $M_w$ of the oligomer had an effect on the peel strength of the oligomers with less than 0.5 wt% BENZO. However, a greater effect was seen with differences in BENZO amount.

Further aspects of the invention are provided by the subject matter of the following clauses:

Clause 1. A curable composition comprising: an oligomer comprising, based on the total weight of the oligomer: from 1% to 80% by weight polymerized high $T_g$ monomer units, the high $T_g$ monomer units being chosen from (meth)acrylate monomers having a glass transition temperature ($T_g$) greater than 25 °C; from 10% to 98.9% by weight polymerized low $T_g$ monomer units, the low $T_g$ monomer units being chosen from monovalent (meth)acrylate monomers having a $T_g$ equal to or less than 25 °C; from 0.1% to 40% by weight polymerized chromophore monomer units, the chromophore monomer units being chosen from (meth)acrylate monomers having a pendent Norrish Type II chromophore; and from 0% to 20% by weight at least one polymerized additional monomer unit,; and a low viscosity reactive diluent having a viscosity equal to or less than 3000 cP at 25 °C, wherein: the oligomer has a weight average molecular weight of at least 10,000 grams per mole (g/mol); the oligomer has a $T_g$ equal to or less than -10 °C; and the curable composition has a viscosity of equal to or less than 50,000 cP at 60 °C.

Clause 2. The curable composition of any preceding clause, wherein a weight ratio of the oligomer to the low viscosity reactive diluent is from 4:1 to 1:4.

Clause 3. The curable composition of any preceding clause, wherein the curable composition comprises, based on the weight of the curable composition: from 20% to 80% by weight of the oligomer; and from 20% to 80% by weight of the low viscosity reactive diluent.

Clause 4. The curable composition of any preceding clause, wherein the oligomer comprises, based on the total weight of the oligomer: from 3% to 44% by weight of the polymerized high $T_g$ monomer units; from 55% to 95% by of the weight polymerized low $T_g$ monomer units; from 0.1% to 2% by weight of the polymerized chromophore monomer units.

Clause 5. The curable composition of any preceding clause, wherein the oligomer has a weight average molecular weight from 10,000 g/mol to 600,000 g/mol.

Clause 6. The curable composition of any preceding clause, wherein a weight ratio of low $T_g$ monomer units to high $T_g$ monomer units in the oligomer is from 24:1 to 1.5:1.

Clause 7. The curable composition of any preceding clause, wherein the $T_g$ of the high $T_g$ monomer units is at least 20 °C greater than the $T_g$ of the low $T_g$ monomer units.

Clause 8. The curable composition of any preceding clause, wherein each of the high $T_g$ monomer units may be according to formula (I):

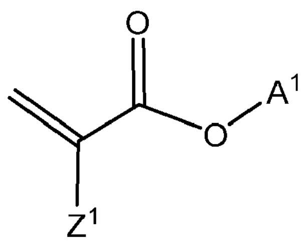

(I)

where: $A^1$ is $(C_1\text{-}C_{30})$hydrocarbyl or $(C_1\text{-}C_{30})$heterohydrocarbyl; and $Z^1$ is -H or $-CH_3$.

Clause 9. The curable composition of any preceding clause, wherein the high $T_g$ monomer units of the oligomer are chosen from 2-phenylethyl methacrylate, neopentyl methacrylate, 3,3,5-trimethylcyclohexyl acrylate, tert-butyl methacrylate, octadecyl methacrylate, octadecyl acrylate, glycidyl methacrylate, propyl methacrylate, tetrahydrofurfuryl methacrylate, benzyl methacrylate, isobutyl methacrylate, glycidyl methacrylate, ethyl methacrylate, 2,2,3,3-tetrafluoropropyl methacrylate, 2-hydroxypropyl methacrylate, 2,2,2-trifluoroethyl methacrylate, 2-hydroxyethyl methacrylate, isopropyl methacrylate, isobornyl acrylate, methyl (meth)acrylate, butyl cyanoacrylate, isobornyl methacrylate, phenyl methacrylate, 2-cyanobutyl acrylate, tert-butyl methacrylate, cyclohexyl acrylate, cyclohexyl methacrylate, 4-tert-butylcyclohexyl acrylate, 4-tert-butylcyclohexyl methacrylate, ethyl cyanoacrylate, methyl cyanoacrylate, 3,3,5-trimethylcyclohexyl acrylate, 3,3,5-trimethylcyclohexyl methacrylate, a substituted or unsubstituted $(C_6\text{-}C_{12})$cycloalkyl (meth)acrylate, adamantyl (meth)acrylate or combinations thereof.

Clause 10. The cruable composition of any preceding clause, wherein the high $T_g$ monomer units of the oligomer are chosen from (meth)acrylate, methyl (meth)acrylate, acrylic acid, isobornyl acrylate, isobornyl (meth)acrylate.

Clause 11. The curable composition of any preceding clause, wherein each of the low $T_g$ monomer units may be according to formula (II):

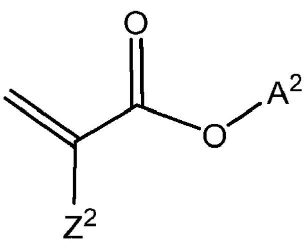

(II)

where: $A^2$ is $(C_4\text{-}C_{30})$hydrocarbyl or $(C_4\text{-}C_{30})$heterohydrocarbyl; and $Z^2$ is -H or $-CH_3$.

Clause 12. The curable composition of any preceding clause, wherein the low Tg monomer units of the oligomer are chosen from n-butyl (meth)acrylate, isobutyl (meth)acrylate, hexyl (meth)acrylate, 2-ethylhexyl (meth)acrylate, isooctyl (meth)acrylate, isodecyl (meth)acrylate, tridecyl (meth)acrylate, lauryl (meth)acrylate, nonyl acrylate, decyl (meth)acrylate, hexyl (meth)acrylate, dodecyl (meth)acrylate, butyl acrylate, 2-ethylhexyl acrylate, octyl (meth)acrylate, propyl acrylate, 4-cyanobutyl acrylate, isobutyl acrylate, 2,2,3,3-tetrafluoropropyl acrylate, ethyl acrylate, sec-butyl acrylate, dodecyl acrylate, tetrahydro furfuryl acrylate, tetradecyl (meth)acrylate, isopropyl acrylate, pentyl (meth)acrylate, 2-cyanoethyl acrylate, benzyl acrylate, phenoxyethyl acrylate, cyclohexyl acrylate, hexadecyl (meth)acrylate, 1-(dimethylamino)ethyl (meth)acrylate, 1-(diethylamino)ethyl (meth)acrylate, cyanomethyl acrylate, 2-methyl butyl acrylate, 2-octyl acrylate, or combinations thereof

Clause 13. The curable composition of any preceding clause, wherein each of the chromophore monomer units may be according to formula (III):

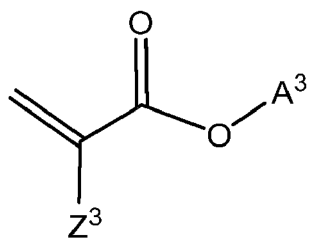

(III)

where $A^3$ of formula (III) is X or -L-X, where L is a $(C_1-C_{10})$heterohydrocarbylene linker and X is a monovalent radical of the Norrish Type II chromophore.

Clause 14. The curable composition of any preceding clause, wherein each of the chromophore monomer units of the oligomer are (meth)acrylates of Nourish Type II photoinitiators.

Clause 15. The curable composition of any preceding clause, wherein the additional monomer units of the oligomer are chosen from dimethylaminoethyl acrylate, dimethylaminoethylmethacrylate, diethylaminoethyl acrylate, acryloylmorpholine, dimethylacrylamide, monoacrylated poly ethylene glygol, monoacrylated propylene glycol, n-vinylpyrrolidone, or combinations thereof.

Clause 16. The curable composition of any preceding clause, wherein the low viscosity reactive diluent comprises a low viscosity (meth)acrylate monomer, the low viscosity (meth)acrylate monomer comprises isodecyl acrylate, alkoxylated tetrahydrofurfuryl acrylate, di-trimethylolpropane tetraacrylate, octyl acrylate, decyl acrylate, PEG mono(meth)acrylates, isooctyl acrylate, caprolactone acrylate, tridecyl acrylate, alkoxylated neopentyl glycol diacrylate, alkoxylate lauryl acrylate, alkoxylate phenol acrylate, tridecyl methacrylate, lauryl acrylate, ethoxylated nonylphenol acrylate, ethoxylated phenol acrylate, glycerol methacrylate, or combinations thereof.

Clause 17. The curable composition of any preceding clause, wherein the curable composition has a glass transition temperature $T_g$ of 20 °C or less when cured or wherein the curable composition is liquid at a temperature of 25 °C $\pm$ 2 °C.

Clause 18. The curable composition of any preceding clause, wherein the curable composition further comprises 0.1 wt% to 40 wt% of at least one tackifying resin.

Clause 19. The curable composition of any preceding clause, wherein the at least one tackifying resin has a softening temperature of 20 °C or less.

Clause 20. The curable composition of any preceding clause, wherein the at least one tackifying resin is selected from the group consisting of piperylene-based hydrocarbon resins which may be hydrogenated and hydrogenated or non-hydrogenated rosin esters, modified by maleic anhydride rosin esters.

Clause 21. The curable composition of any preceding clause, wherein the curable composition is a pressure sensitive adhesive curable composition.

Clause 22. A cured composition, wherein it is obtained by curing of the curable composition of any preceding clause.

Clause 23. The cured composition of any preceding clause, wherein the cured composition is a pressure sensitive adhesive in the form of an adhesive tape, an adhesive sheet, an adhesive spray, a product package, a product label, a construction article, or a medical product.

Clause 24. The cured composition of any preceding clause, wherein the cured composition is for packaging, labelling, construction, model making, medicine, and construction applications.

Clause 25. A pressure sensitive adhesive produced using the curable composition of any preceding clause.

Clause 26. A method of coating a substrate comprising: applying the curable composition of any preceding clause to a substrate; and curing the curable composition by exposure to UV radiation.

Clause 27. The method of any preceding clause, wherein the applying step comprises applying by spraying, knife coating, roller coating, casting, drum coating, dipping or combinations thereof.

It will be apparent to persons of ordinary skill in the art that various modifications and variations may be made without departing from the scope disclosed herein. Since modifications, combinations, sub-combinations, and variations of the disclosed embodiments, which incorporate the spirit and substance disclosed herein, may occur to persons of ordinary skill in the art, the scope disclosed herein should be construed to include everything within the scope of the appended claims and their equivalents.

For the purposes of defining the present technology, the transitional phrase "consisting of" may be introduced in the claims as a closed preamble term limiting the scope of the claims to the recited components or steps and any naturally occurring impurities. For the purposes of defining the present technology, the transitional phrase "consisting essentially of" may be introduced in the claims to limit the scope of one or more claims to the recited elements, components, materials, or method steps as well as any non-recited elements, components, materials, or method steps that do not materially affect the novel characteristics of the claimed subject matter.

As used in the Specification and appended Claims, the singular forms "a", "an", and "the" include plural references unless the context clearly indicates otherwise. The verb "comprises" and its conjugated forms should be interpreted as referring to elements, components or steps in a non-exclusive manner. The referenced elements, components or steps may be present, utilized or combined with other elements, components or steps not expressly referenced.

It should be understood that any two quantitative values assigned to a property may constitute a range of that property, and all combinations of ranges formed from all stated quantitative values of a given property are contemplated in this disclosure. The subject matter disclosed herein has been described in detail and by reference to specific embodiments. It should be understood that any detailed description of a component or feature of an embodiment does not necessarily imply that the component or feature is essential to the particular embodiment or to any other embodiment.

## Claims

**1.** A curable composition comprising:

an oligomer comprising, based on the total weight of the oligomer:

from 1% to 80% by weight polymerized high $T_g$ monomer units, the high $T_g$ monomer units being chosen from (meth)acrylate monomers having a glass transition temperature ($T_g$) greater than 25 °C;
from 10% to 98.9% by weight polymerized low $T_g$ monomer units, the low $T_g$ monomer units being chosen from monovalent (meth)acrylate monomers having a $T_g$ equal to or less than 25 °C;
from 0.1% to 40% by weight polymerized chromophore monomer units, the chromophore monomer units being chosen from (meth)acrylate monomers having a pendent Norrish Type II chromophore; and
from 0% to 20% by weight at least one polymerized additional monomer unit; and

a low viscosity reactive diluent having a viscosity equal to or less than 3000 cP at 25 °C,
wherein:

the oligomer has a weight average molecular weight of at least 10,000 grams per mole (g/mol);
the oligomer has a $T_g$ equal to or less than -10 °C; and
the curable composition has a viscosity of equal to or less than 50,000 cP at 60 °C.

**2.** The curable composition of claim 1, wherein a weight ratio of the oligomer to the low viscosity reactive diluent is from 4:1 to 1:4.

**3.** The curable composition of claim 1 or claim 2, wherein the oligomer comprises, based on the total weight of the oligomer:

from 3% to 44% by weight of the polymerized high $T_g$ monomer units;
from 55% to 95% by of the weight polymerized low $T_g$ monomer units;
from 0.1% to 2% by weight of the polymerized chromophore monomer units.

4. The curable composition of any one of claims 1 to 3, wherein the oligomer has a weight average molecular weight from 10,000 g/mol to 600,000 g/mol.

5. The curable composition of any one of claims 1 to 4, wherein a weight ratio of low $T_g$ monomer units to high $T_g$ monomer units in the oligomer is from 24:1 to 1.5:1.

6. The curable composition of any one of claims 1 to 5 wherein the $T_g$ of the high $T_g$ monomer units is at least 20 °C greater than the $T_g$ of the low $T_g$ monomer units.

7. The curable composition of any one of claims 1 to 6, wherein the high $T_g$ monomer units of the oligomer are chosen from (2-phenylethyl methacrylate, neopentyl methacrylate, 3,3,5-trimethylcyclohexyl acrylate, tert-butyl methacrylate, octadecyl methacrylate, octadecyl acrylate, glycidyl methacrylate, propyl methacrylate, tetrahydrofurfuryl methacrylate, benzyl methacrylate, isobutyl methacrylate, glycidyl methacrylate, ethyl methacrylate, 2,2,3,3-tetrafluoropropyl methacrylate, 2-hydroxypropyl methacrylate, 2,2,2-trifluoroethyl methacrylate, 2-hydroxyethyl methacrylate, isopropyl methacrylate, isobornyl acrylate, methyl (meth)acrylate, butyl cyanoacrylate, isobornyl methacrylate, phenyl methacrylate, 2-cyanobutyl acrylate, tert-butyl methacrylate, cyclohexyl acrylate, cyclohexyl methacrylate, 4-tert-butylcyclohexyl acrylate, 4-tert-butylcyclohexyl methacrylate, ethyl cyanoacrylate, methyl cyanoacrylate, 3,3,5-trimethylcyclohexyl acrylate, 3,3,5-trimethylcyclohexyl methacrylate, a substituted or unsubstituted ($C_6$-$C_{12}$)cycloalkyl (meth)acrylate, adamantyl (meth)acrylate or combinations thereof.

8. The curable composition of claim 7, wherein the high $T_g$ monomer units of the oligomer are chosen from methyl acrylate, methyl methacrylate, acrylic acid, isobornyl acrylate, isobornyl methacrylate and isobornyl acrylate.

9. The curable composition of any one of claims 1 to 8, wherein the low Tg monomer units of the oligomer are chosen from n-butyl (meth)acrylate, isobutyl (meth)acrylate, hexyl (meth)acrylate, 2-ethylhexyl (meth)acrylate, isooctyl (meth)acrylate, isodecyl (meth)acrylate, tridecyl (meth)acrylate, lauryl (meth)acrylate, nonyl acrylate, decyl (meth)acrylate, hexyl (meth)acrylate, dodecyl (meth)acrylate, butyl acrylate, 2-ethylhexyl acrylate, octyl (meth)acrylate, propyl acrylate, 4-cyanobutyl acrylate, isobutyl acrylate, 2,2,3,3-tetrafluoropropyl acrylate, ethyl acrylate, sec-butyl acrylate, dodecyl acrylate, tetrahydro furfuryl acrylate, tetradecyl (meth)acrylate, isopropyl acrylate, pentyl (meth)acrylate, 2-cyanoethyl acrylate, benzyl acrylate, phenoxyethyl acrylate, cyclohexyl acrylate, hexadecyl (meth)acrylate, 1-(dimethylamino)ethyl (meth)acrylate, 1-(diethylamino)ethyl (meth)acrylate, cyanomethyl acrylate, 2-methyl butyl acrylate, 2-octyl acrylate, or combinations thereof.

10. The curable composition of any one of claims 1 to 9, wherein each of the chromophore monomer units of the oligomer are (meth)acrylates of Norrish Type II photoiniators.

11. The curable composition of any one of claims 1 to 10, wherein the at least one polymerized additional monomer unit of the oligomer is chosen from dimethylaminoethyl acrylate, dimethylaminoethylmethacrylate, diethylaminoethyl acrylate, acryloylmorpholine, dimethylacrylamide, monoacrylated poly ethylene glygol, monoacrylated propylene glycol, N-vinylpyrrolidone, or combinations thereof.

12. The curable composition of any one of claims 1 to 11, wherein the low viscosity reactive diluent comprises a low viscosity (meth)acrylate monomer, the low viscosity (meth)acrylate monomer comprises isodecyl acrylate, alkoxylated tetrahydrofurfuryl acrylate, di-trimethylolpropane tetraacrylate, octyl acrylate, decyl acrylate, PEG mono(meth)acrylates, isooctyl acrylate, caprolactone acrylate, tridecyl acrylate, alkoxylated neopentyl glycol diacrylate, alkoxylate lauryl acrylate, alkoxylate phenol acrylate, tridecyl methacrylate, lauryl acrylate, ethoxylated nonylphenol acrylate, ethoxylated phenol acrylate, glycerol methacrylate, or combinations thereof.

13. The curable composition of any one of claims 1 to 12, wherein the curable composition has a glass transition temperature $T_g$ of 20 °C or less when cured or wherein the curable composition is liquid at a temperature of 25 °C $\pm$ 2 °C.

14. The curable composition of any one of claims 1 to 13, wherein the curable composition is a pressure sensitive adhesive curable composition.

15. A method of coating a substrate, the method comprising:

applying the curable composition of any one of claims 1 to 14 to a substrate; and

curing the curable composition by exposure to UV radiation.

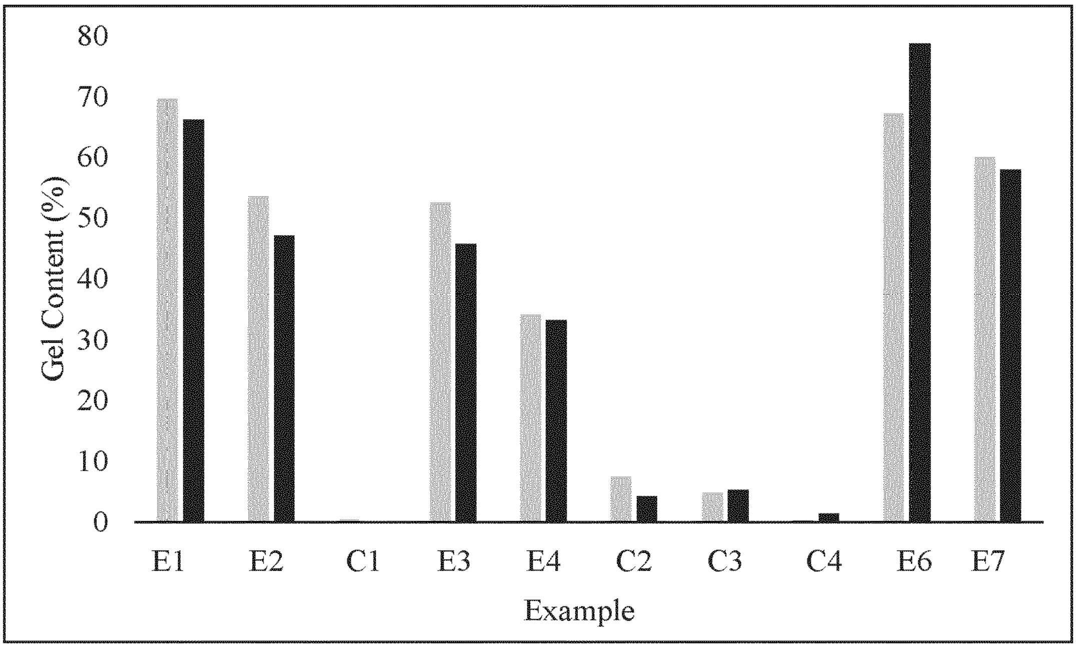
80
70
60
50
40
30
20
10
0
Gel Content (%)
E1
E2
C1
E3
E4
C2
C3
C4
E6
E7
Example

FIG. 1

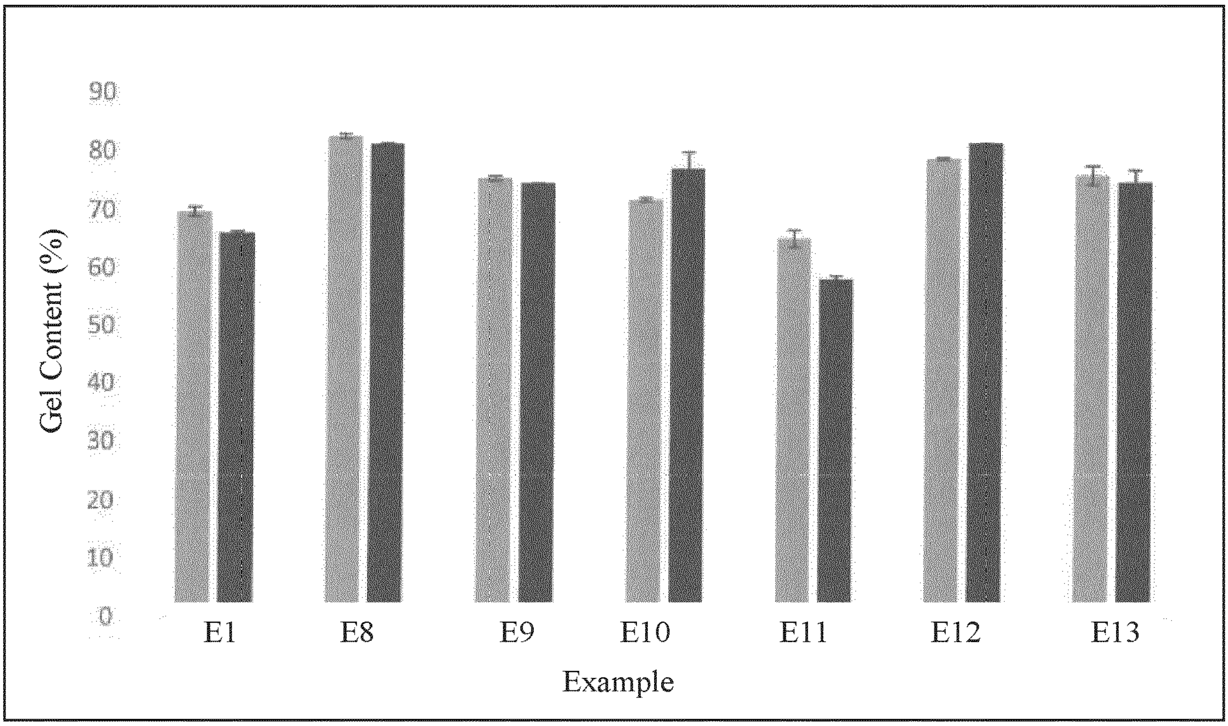
90
80
70
60
50
40
30
20
10
0
Gel Content (%)
E1
E8
E9
E10
E11
E12
E13
Example

FIG. 2

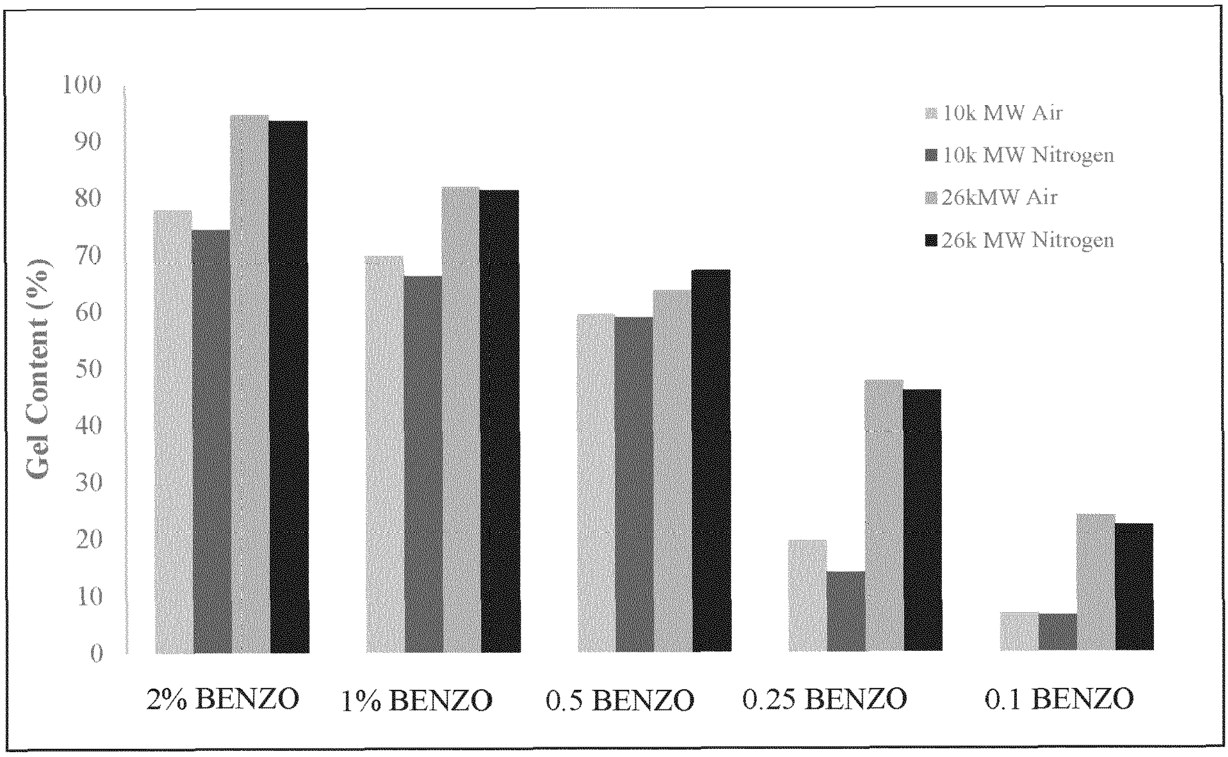
100
90
80
70
60
50
40
30
20
10
0
Gel Content (%)
10k MW Air
10k MW Nitrogen
26kMW Air
26k MW Nitrogen
2% BENZO
1% BENZO
0.5 BENZO
0.25 BENZO
0.1 BENZO

FIG. 3

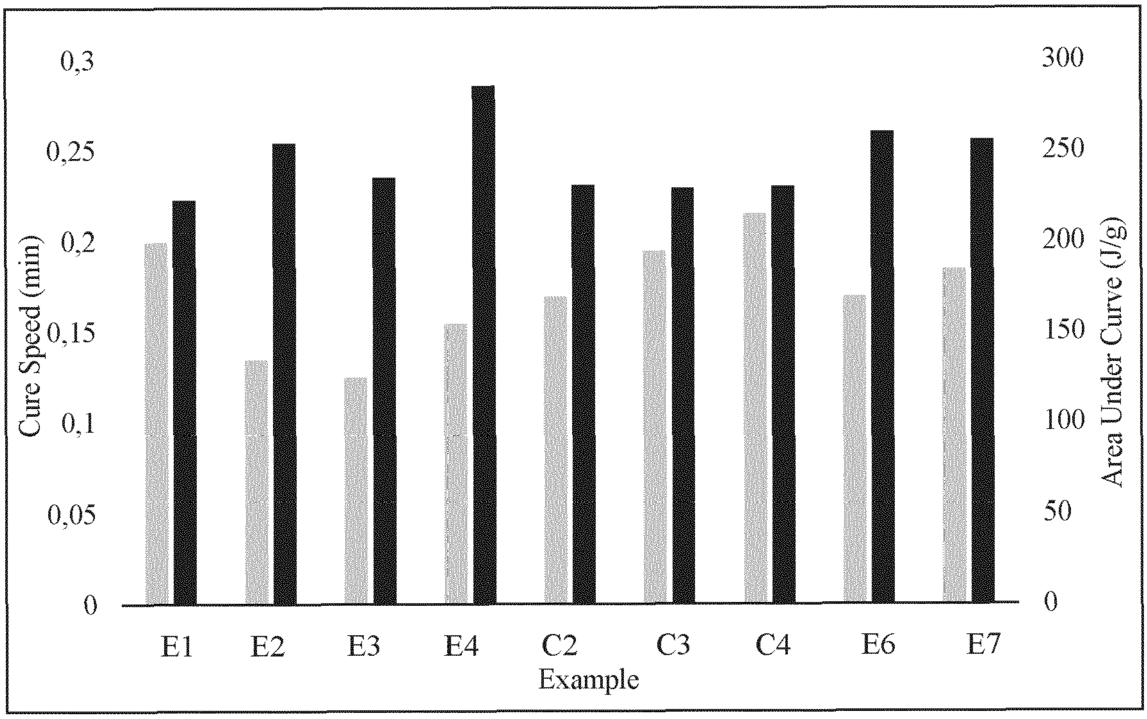
0,3
0,25
0,2
0,15
0,1
0,05
0
Cure Speed (min)
300
250
200
150
100
50
0
Area Under Curve (J/g)
E1
E2
E3
E4
C2
C3
C4
E6
E7
Example

FIG. 4

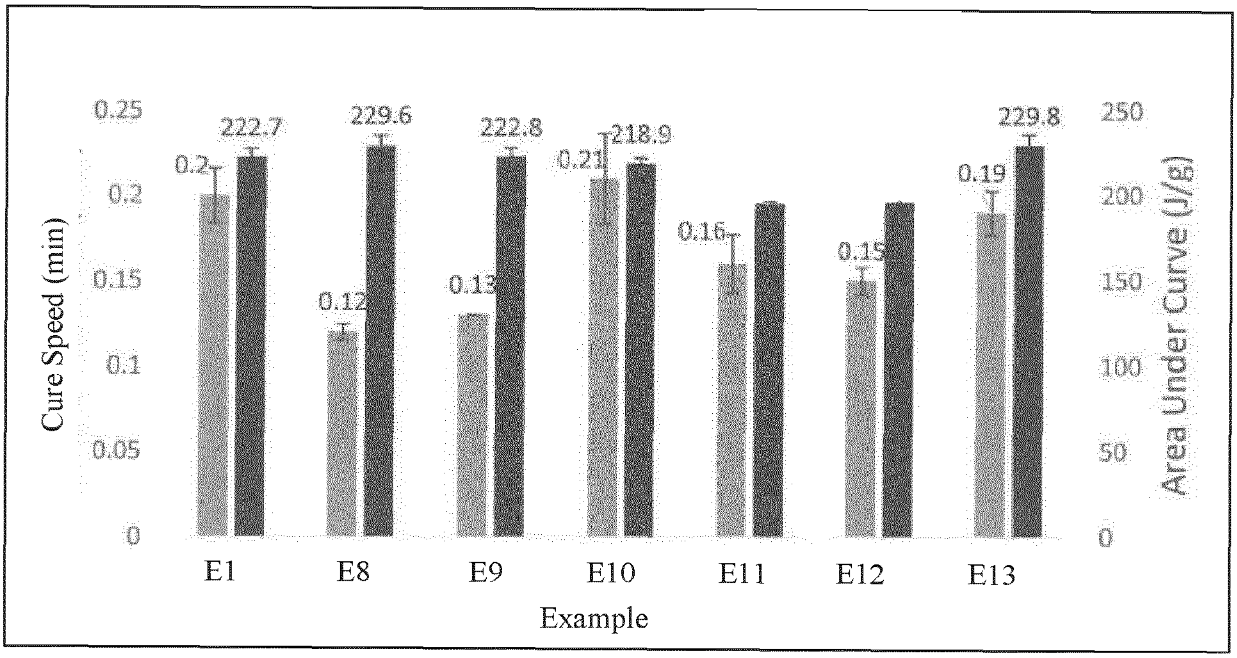
0.25
0.2
0.15
0.1
0.05
0
Cure Speed (min)
222.7
229.6
222.8
218.9
229.8
0.2
0.12
0.13
0.21
0.16
0.15
0.19
250
200
150
100
50
0
Area Under Curve (J/g)
E1
E8
E9
E10
E11
E12
E13
Example

FIG. 5

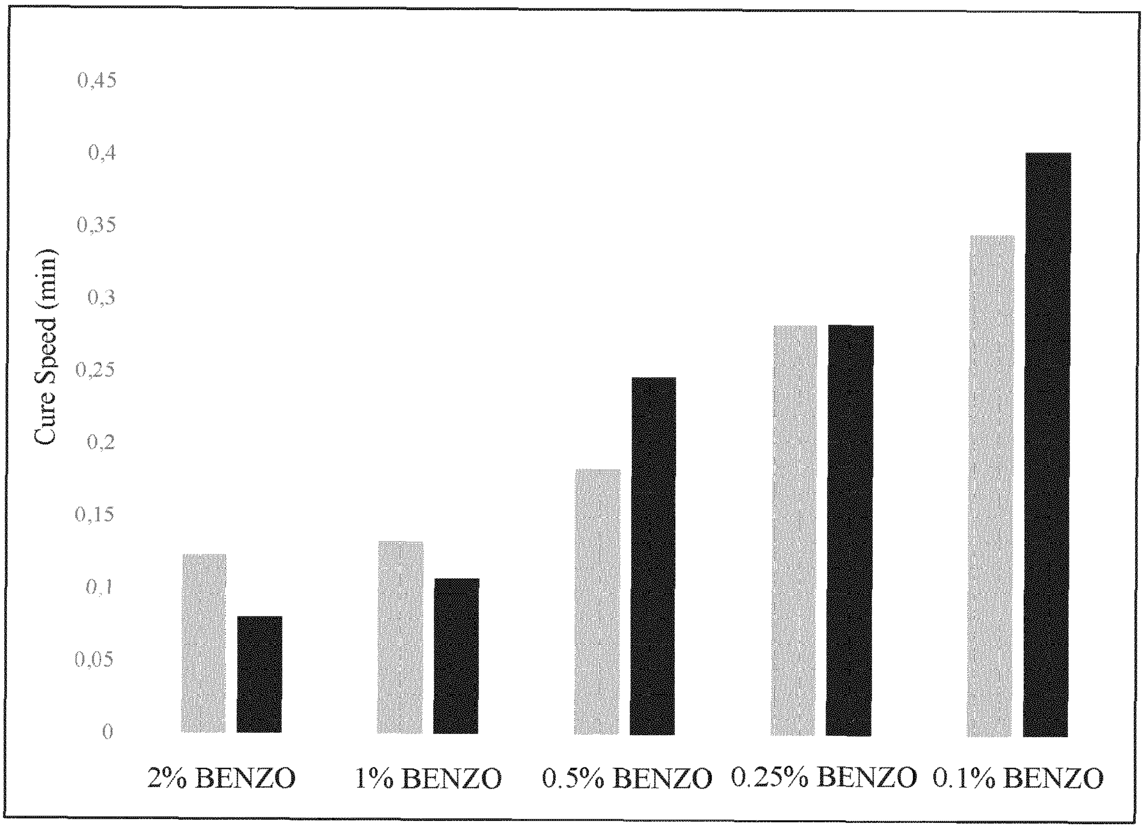
0,45
0,4
0,35
0,3
0,25
0,2
0,15
0,1
0,05
0
Cure Speed (min)
2% BENZO
1% BENZO
0.5% BENZO
0.25% BENZO
0.1% BENZO

FIG. 6

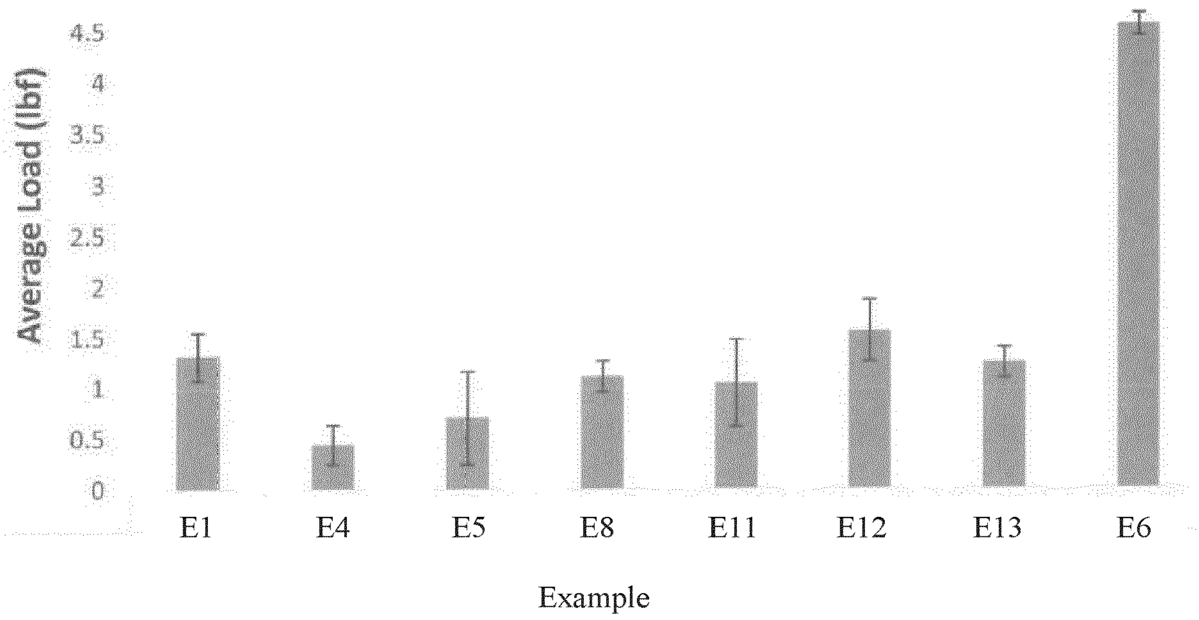
Average Load (lbf)
4.5
4
3.5
3
2.5
2
1.5
1
0.5
0
E1
E4
E5
E8
E11
E12
E13
E6
Example

FIG. 7

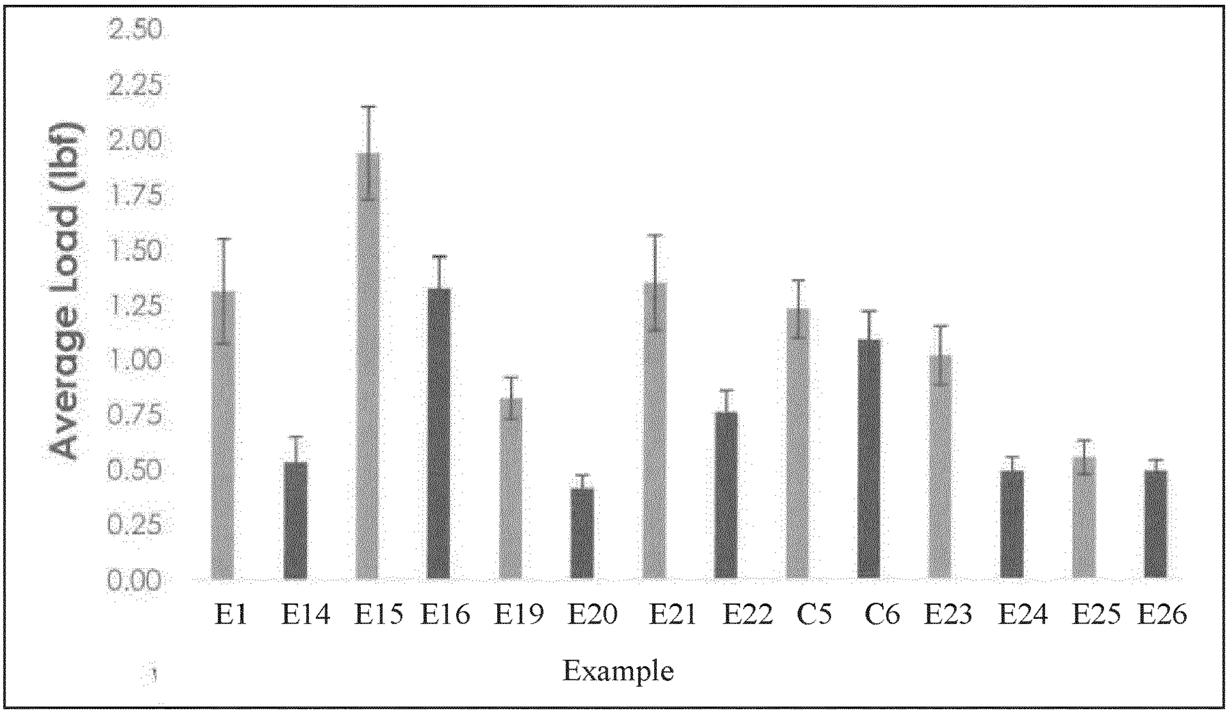
Average Load (lbf)
2.50
2.25
2.00
1.75
1.50
1.25
1.00
0.75
0.50
0.25
0.00
E1
E14
E15
E16
E19
E20
E21
E22
C5
C6
E23
E24
E25
E26
Example

FIG. 8

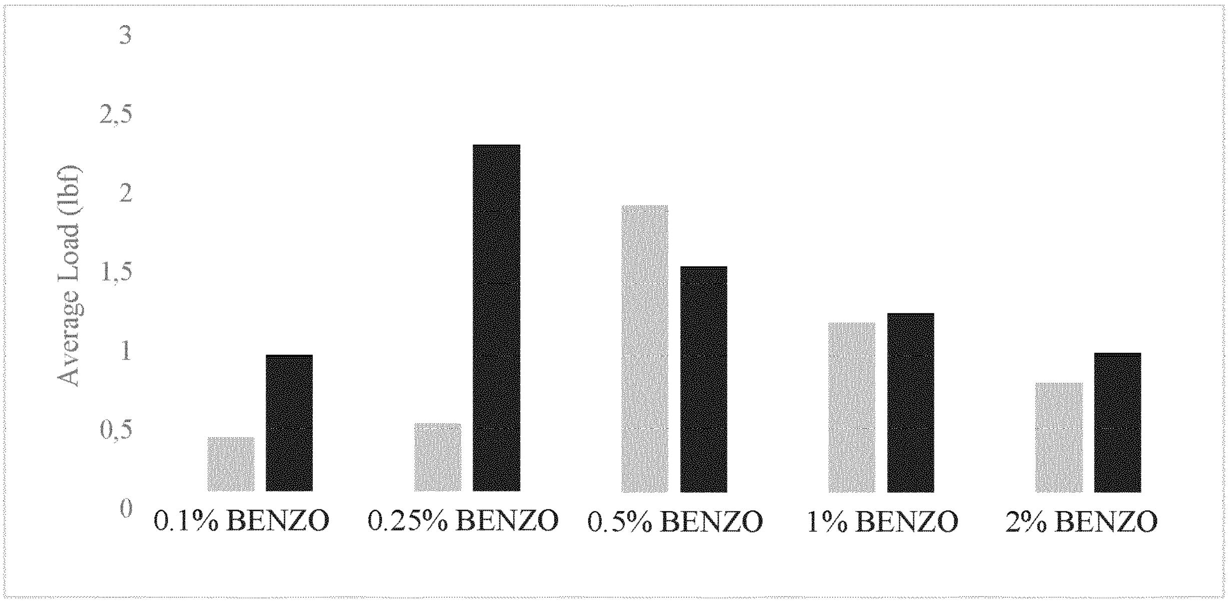
3
2,5
2
1,5
1
0,5
0
Average Load (lbf)
0.1% BENZO
0.25% BENZO
0.5% BENZO
1% BENZO
2% BENZO

FIG. 9

Europäisches Patentamt
European Patent Office
Office européen des brevets

# EUROPEAN SEARCH REPORT

Application Number
EP 22 30 6079

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KOWALCZYK AGNIESZKA ET AL: "Influence of Acrylic Acid on Kinetics of UV-Induced Cotelomerization Process and Properties of Obtained Pressure-Sensitive Adhesives", MATERIALS, vol. 13, no. 24, 11 December 2020 (2020-12-11), page 5661, XP093015961, DOI: 10.3390/ma13245661 * abstract * * section 2: materials and methods; tables 1,2 * * section 3: results; figures 1-7 * ----- | 1,3-10, 13-15 | INV. C08F220/18 C08F265/06 C09D4/06 C09J4/06 |
| X | WEISBRODT MATEUSZ ET AL: "Structural Adhesives Tapes Based on a Solid Epoxy Resin and Multifunctional Acrylic Telomers", POLYMERS, vol. 13, no. 20, 15 October 2021 (2021-10-15), page 3561, XP093015739, DOI: 10.3390/polym13203561 * abstract * * sections 2, 3; figures 1-8; examples MAT-T-5 to MAT-T-15; tables 1-3 * ----- | 1,3,5-7, 10,14,15 | |
| X<br>Y | WO 2021/024862 A1 (NITTO DENKO CORP [JP]) 11 February 2021 (2021-02-11) * paragraphs [0001], [0072], [0145] - [0148]; example 1 * ----- | 1-10, 13-15<br>11,12 | TECHNICAL FIELDS SEARCHED (IPC)<br>C08F<br>C09D<br>C09J |
| Y | US 2020/216724 A1 (LEE SU EUN [KR] ET AL) 9 July 2020 (2020-07-09) * paragraphs [0002], [0058], [0061], [0088], [0129] - [0137]; example 1 * ----- | 11,12 | |

The present search report has been drawn up for all claims

1

| Place of search | Date of completion of the search | Examiner |
|---|---|---|
| The Hague | 23 January 2023 | Dessemond, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 22 30 6079

This annex lists the patent family members relating to the patent documents cited in the above-mentioned European search report. The members are as contained in the European Patent Office EDP file on
The European Patent Office is in no way liable for these particulars which are merely given for the purpose of information.

23-01-2023

| Patent document cited in search report | Publication date | Patent family member(s) | Publication date |
| --- | --- | --- | --- |
| WO 2021024862 A1 | 11-02-2021 | CN 114144488 A | 04-03-2022 |
| | | JP 2021025043 A | 22-02-2021 |
| | | KR 20220044299 A | 07-04-2022 |
| | | TW 202113016 A | 01-04-2021 |
| | | US 2022275250 A1 | 01-09-2022 |
| | | WO 2021024862 A1 | 11-02-2021 |
| US 2020216724 A1 | 09-07-2020 | CN 111032811 A | 17-04-2020 |
| | | EP 3656830 A1 | 27-05-2020 |
| | | JP 7083095 B2 | 10-06-2022 |
| | | JP 2020530521 A | 22-10-2020 |
| | | KR 20190037936 A | 08-04-2019 |
| | | TW 201920539 A | 01-06-2019 |
| | | US 2020216724 A1 | 09-07-2020 |
| | | WO 2019066528 A1 | 04-04-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **A. GILBERT, J. BAGGOTT.** Essentials of Molecular Photochemistry. Blackwell, 1991